# EUROPEAN PATENT APPLICATION

(11) **EP 4 800 988 A1**
(43) Date of publication of application: **02.09.2026**
(21) Application number: 24890646.3
(22) Date of filing: 12.11.2024
(51) Int. Cl.: H04L 27/00

(54) **SIGNAL TRANSMISSION METHOD AND APPARATUS**

(30) Priority: 13.11.2023 CN 202311514869
(71) Applicant: Huawei Technologies Co., Ltd., Shenzhen, Guangdong 518129 (CN)
(72) Inventor: WANG, Ruihua, Shenzhen, Guangdong 518129 (CN); WANG, Fan, Shenzhen, Guangdong 518129 (CN)
(74) Representative: Goddar, Heinz J.
(86) International application number: PCT/CN2024/131487
(87) International publication number: WO 2025/103291

(57) **Abstract**

A signal transmission method and an apparatus are provided. **In** the signal transmission method, a first device determines a synchronization signal and a sensing signal based on a first sequence; the first device sends the synchronization signal and the sensing signal, where the sensing signal is used to determine a beam corresponding to a terminal device. A frequency offset value, relative to the first sequence, of the synchronization signal is different from that of the sensing signal. An auto-correlation function of the first sequence has a value of 0 for a non-zero time shift, and an auto-ambiguity function of the first sequence has a unique peak. It can be learned that, the method constructs both the synchronization signal and the sensing signal based on the first sequence, and distinguishes them by using different frequency offset values. The method combines synchronization and sensing to implement integrated sensing and communication. **In** addition, the method further enables the terminal device to use the beam determined based on the sensing signal for more accurate communication with the first device, thereby improving communication quality.

## Description

This application claims priority to Chinese Patent Application No. 202311514869.3, filed with the China National Intellectual Property Administration on November 13, 2023 and entitled "SIGNAL TRANSMISSION METHOD AND APPARATUS", which is incorporated herein by reference in its entirety.

### TECHNICAL FIELD

This application relates to the field of communication technologies, and in particular, to a signal transmission method and an apparatus.

### BACKGROUND

With the continuous development of technologies, future base stations are expected to support sensing functions in addition to communication functions. Integrating sensing into base stations enables the base stations to provide more accurate communication services. For terminal devices, sensing signals sent by the base stations can provide valuable information, facilitating more precise communication with the base stations in subsequent interactions. Therefore, achieving integrated sensing and communication has become a technical challenge that needs to be addressed.

### SUMMARY

Embodiments of this application provide a signal transmission method and an apparatus that combine synchronization with sensing to implement integrated sensing and communication, thereby helping to improve communication quality.

According to a first aspect, this application provides a signal transmission method. The method may be applied to a first device, may be applied to a chip in a first device, or may be applied to a logical module or software that can implement all or some functions of a first device. The method includes: determining a synchronization signal and a sensing signal based on a first sequence; sending the synchronization signal; and sending the sensing signal, where the sensing signal is used to determine a beam corresponding to a terminal device. A frequency offset value, relative to the first sequence, of the synchronization signal is different from that of the sensing signal, an auto-correlation function of the first sequence has a value of 0 for a non-zero time shift, and an auto-ambiguity function of the first sequence has a unique peak.

It can be learned that, in the method, both the synchronization signal and the sensing signal are constructed based on the first sequence. The frequency offset value, relative to the first sequence, of the synchronization signal is different from that of the sensing signal, which helps distinguish between the synchronization signal and the sensing signal. In the method, synchronization and sensing are combined, to implement integrated sensing and communication. In addition, the method further helps the terminal device determine, based on the sensing signal, the beam corresponding to the terminal device, so that the terminal device can subsequently perform more accurate communication by using the determined beam, thereby improving communication quality.

In an optional implementation, the frequency offset value, relative to the first sequence, of the synchronization signal is an odd multiple of a first parameter, and the frequency offset value, relative to the first sequence, of the sensing signal is an even multiple of the first parameter; or the frequency offset value, relative to the first sequence, of the synchronization signal is an even multiple of a first parameter, and the frequency offset value, relative to the first sequence, of the sensing signal is an odd multiple of the first parameter, where the first parameter is determined based on a maximum moving speed of an object within a cell. It can be learned that a parity of a multiple obtained by dividing the frequency offset value, relative to the first sequence, of the synchronization signal by the first parameter is different from that of the synchronization signal by the first parameter, which helps distinguish between the synchronization signal and the sensing signal.

In an optional implementation, sending the sensing signal includes: sending the sensing signal on each of a plurality of first beams, where cyclic shift values, relative to the first sequence, of the sensing signals sent on different first beams among the plurality of first beams are different; and the sensing signal is used to determine, from the plurality of first beams, the beam corresponding to the terminal device.

It can be learned that, in this implementation, the cyclic shift values, relative to the first sequence, of the sensing signals sent on the different first beams are different, which helps distinguish between the sensing signals on the different first beams, and helps the terminal device determine, from the plurality of first beams based on the cyclic shift values of the received sensing signals relative to the first sequence, the beam corresponding to the terminal device.

In an optional implementation, the cyclic shift values, relative to the first sequence, of the sensing signals sent on the different first beams among the plurality of first beams are different integer multiples of a second parameter; and the second parameter is determined based on a maximum delay from sending a signal to receiving a reflected signal corresponding to the signal.

In an optional implementation, the different first beams among the plurality of first beams have different coverage areas; and a coverage area of each of the plurality of first beams falls within a coverage area of a second beam, and the second beam is a beam used to send the synchronization signal.

In an optional implementation, the first sequence is [*k*₀, *k*₁, *..., k*_{*l*-1}]*,* and *l* is an integer greater than 1. Determining the synchronization signal and the sensing signal based on the first sequence includes: determining the synchronization signal and the sensing signal based on the first sequence and the following formula: ${B}_{p}^{θ} \left(n\right) = {k}_{\left(n+p\right) mod \left(l\right)} \times exp \left(jnθ\right)$*,* where *n =* 0, 1, ... *, l* - 1; and *θ* is the frequency offset value, p is the cyclic shift value, *mod* is a modulo function, and *exp* is an exponential function with a natural constant e as a base.

In an optional implementation, the first sequence is [*k*₀, *k*₁, *..., k*_{*l*-1}]*,* and *l* is an integer greater than 1; and the first sequence satisfies the following formula: ${\sum }_{n = 0}^{l - 1} {k}_{n mod l} ⋅ {k}_{\left(n+c\right) mod l}^{∗} = \left\{\begin{matrix}{\sum }_{n = 0}^{l - 1} {\left|{k}_{n}\right|}^{2} & c = 0 \\ 0 & 0 < c < l\end{matrix},\right.$ where c is a time shift, and *mod* is a modulo function.

In an optional implementation, the first sequence is obtained by performing discrete Fourier transform on a modulated m-sequence.

In an optional implementation, the synchronization signal is a primary synchronization signal.

According to a second aspect, this application provides a signal transmission method. The method may be applied to a terminal device, may be applied to a chip in a terminal device, or may be applied to a logical module or software that can implement all or some functions of a terminal device. The following uses a terminal device as an example for description. The method includes: receiving a synchronization signal; receiving a sensing signal; and determining, based on the sensing signal, a beam corresponding to the terminal device. A frequency offset value, relative to the first sequence, of the synchronization signal is different from that of the sensing signal, an auto-correlation function of the first sequence has a value of 0 for a non-zero time shift, and an auto-ambiguity function of the first sequence has a unique peak.

It can be learned that the synchronization signal and the sensing signal are constructed based on the first sequence. The frequency offset value, relative to the first sequence, of the synchronization signal is different from that of the sensing signal, which helps distinguish between the synchronization signal and the sensing signal, and further helps the terminal device identify whether a received signal is the synchronization signal or the sensing signal. In the method, synchronization and sensing are combined, to implement integrated sensing and communication. In addition, the method further helps the terminal device subsequently perform more accurate communication by using the determined beam, thereby improving communication quality.

In an optional implementation, the frequency offset value, relative to the first sequence, of the synchronization signal is an odd multiple of a first parameter, and the frequency offset value, relative to the first sequence, of the sensing signal is an even multiple of the first parameter; or the frequency offset value, relative to the first sequence, of the synchronization signal is an even multiple of a first parameter, and the frequency offset value, relative to the first sequence, of the sensing signal is an odd multiple of the first parameter, where the first parameter is determined based on a maximum moving speed of an object within a cell. It can be learned that a parity of a multiple obtained by dividing the frequency offset value, relative to the first sequence, of the synchronization signal by the first parameter is different from that of the synchronization signal by the first parameter, which helps distinguish between the synchronization signal and the sensing signal.

In an optional implementation, determining, based on the sensing signal, the beam corresponding to the terminal device includes: determining, from a plurality of first beams based on a cyclic shift value, relative to the first sequence, of the sensing signal, the beam corresponding to the terminal device.

In an optional implementation, determining, from the plurality of first beams based on the cyclic shift value, relative to the first sequence, of the received sensing signal, the beam corresponding to the terminal device includes: determining, from the plurality of first beams based on the cyclic shift value, relative to the first sequence, of the sensing signal and a second parameter, the beam corresponding to the terminal device.

In an optional implementation, the first sequence is [*k*₀, *k*₁, *..., k*_{*l*-1}]*,* and *l* is an integer greater than 1; and the synchronization signal and the sensing signal are determined based on the first sequence and the following formula: ${B}_{p}^{θ} \left(n\right) = {k}_{\left(n+p\right) mod \left(l\right)} \times exp \left(jnθ\right)$*,* where *n =* 0, 1, ... *, l* - 1; and *θ* is the frequency offset value, p is the cyclic shift value, *mod* is a modulo function, and *exp* is an exponential function with a natural constant e as a base.

In an optional implementation, the first sequence is [*k*₀, *k*₁, *..., k*_{*l*-1}]*,* and *l* is an integer greater than 1; and the first sequence satisfies the following formula: ${\sum }_{n = 0}^{l - 1} {k}_{n mod l} ⋅ {k}_{\left(n+c\right) mod l}^{∗} = \left\{\begin{matrix}{\sum }_{n = 0}^{l - 1} {\left|{k}_{n}\right|}^{2} & c = 0 \\ 0 & 0 < c < l\end{matrix},\right.$ where c is a time shift, and *mod* is a modulo function.

In an optional implementation, the first sequence is obtained by performing discrete Fourier transform on a modulated m-sequence.

In an optional implementation, the synchronization signal is a primary synchronization signal.

According to a third aspect, this application further provides a communication apparatus. The communication apparatus may be a first device, or may be a module or unit (for example, a chip, a chip system, or a circuit) that is in a first device and that performs, in one-to-one correspondence, the method/operation/step/action described in the first aspect, or may be an apparatus that can be used in collaboration with a first device. The communication apparatus has a function of implementing a part or all of the implementations of the first aspect. Alternatively, the communication apparatus may be a terminal device, or may be a module or unit (for example, a chip, a chip system, or a circuit) that is in a terminal device and that performs, in one-to-one correspondence, the method/operation/step/action described in the second aspect, or may be an apparatus that can be used in collaboration with a terminal device. The communication apparatus has a function of implementing a part or all of the implementations of the second aspect. The function may be implemented by hardware, or may be implemented by hardware executing corresponding software. The hardware or the software includes one or more units or modules corresponding to the function.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus. In addition, the processing unit may be configured to control the communication unit to perform data/signaling receiving and sending.

In an implementation, the processing unit is configured to determine a synchronization signal and a sensing signal based on a first sequence, where a frequency offset value, relative to the first sequence, of the synchronization signal is different from that of the sensing signal, an auto-correlation function of the first sequence has a value of 0 for a non-zero time shift, and an auto-ambiguity function of the first sequence has a unique peak.

The communication unit is configured to send the synchronization signal.

The communication unit is further configured to send the sensing signal, where the sensing signal is used to determine a beam corresponding to the terminal device.

In addition, for another optional implementation of the communication apparatus in this aspect, refer to the related content in the first aspect. Details are not described herein again.

In an implementation, the communication unit is configured to receive a synchronization signal.

The communication unit is further configured to receive a sensing signal.

A frequency offset value, relative to the first sequence, of the synchronization signal is different from that of the sensing signal, an auto-correlation function of the first sequence has a value of 0 for a non-zero time shift, and an auto-ambiguity function of the first sequence has a unique peak.

The processing unit is configured to determine, based on the sensing signal, a beam corresponding to the apparatus.

In addition, for another optional implementation of the communication apparatus in this aspect, refer to the related content in the second aspect. Details are not described herein again.

For example, the communication unit may be a transceiver or a communication interface, the storage unit may be a memory, and the processing unit may be a processor. The processor is coupled to the memory. The memory is configured to store a program or instructions of the processor. The processor may be configured to enable, when the program or the instructions are executed by the processor, the communication apparatus to perform the method according to the first aspect. The transceiver or the communication interface may be configured to receive and send signals and/or data.

In an implementation, a processor is configured to determine a synchronization signal and a sensing signal based on a first sequence, where a frequency offset value, relative to the first sequence, of the synchronization signal is different from that of the sensing signal, an auto-correlation function of the first sequence has a value of 0 for a non-zero time shift, and an auto-ambiguity function of the first sequence has a unique peak.

A transceiver is configured to send the synchronization signal.

The transceiver is further configured to send the sensing signal, where the sensing signal is used to determine a beam corresponding to the terminal device.

In addition, for another optional implementation of the communication apparatus in this aspect, refer to the related content in the first aspect. Details are not described herein again.

In an implementation, a transceiver is configured to receive a synchronization signal.

The transceiver is further configured to receive a sensing signal.

A frequency offset value, relative to the first sequence, of the synchronization signal is different from that of the sensing signal, an auto-correlation function of the first sequence has a value of 0 for a non-zero time shift, and an auto-ambiguity function of the first sequence has a unique peak.

A processor is configured to determine, based on the sensing signal, a beam corresponding to the apparatus.

In addition, for another optional implementation of the communication apparatus in this aspect, refer to the related content in the second aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver or the communication interface may be configured to perform, for example, but not limited to, radio frequency receiving and sending. The foregoing devices may be separately disposed on chips that are independent of each other, or at least some or all of the devices may be disposed on a same chip. For example, the processor may be divided into an analog baseband processor and a digital baseband processor. The analog baseband processor and the transceiver (or the communication interface) may be integrated on a same chip, and the digital baseband processor may be disposed on an independent chip. With continuous development of an integrated circuit technology, increasingly devices may be integrated on a same chip. For example, the digital baseband processor and a plurality of application processors (for example, but not limited to, a graphics processing unit and a multimedia processor) may be integrated on a same chip. The chip may be referred to as a system on a chip (System on a Chip, SoC). Whether the devices are separately disposed on different chips or integrated and disposed on one or more chips usually depends on a requirement of a product design. This embodiment of this application imposes no limitation on specific implementations of the foregoing devices.

According to a fourth aspect, this application further provides a processor, configured to perform the foregoing methods. In processes of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to a transceiver, so that the transceiver (or a communication interface) transmits the signal. After the foregoing signal is output by the processor, other processing may further need to be performed on the signal before the signal reaches the transceiver (or the communication interface). Similarly, when the processor receives the input signal, the transceiver (or the communication interface) receives the signal, and inputs the signal into the processor. Further, after the transceiver (or the communication interface) receives the foregoing signal, other processing may further need to be performed on the foregoing signal, and then a processed signal is input to the processor.

Operations such as sending and receiving related to the processor may be more generally understood as operations such as an outputting, receiving, and inputting of the processor, unless otherwise specified or if the operations do not conflict with actual functions or internal logic of the operations in related descriptions, instead of operations such as sending and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in this embodiment of this application.

According to a fifth aspect, this application further provides a communication system. The system includes the first device and the terminal device in the foregoing aspects. In another possible design, the system may further include another device that interacts with the first device and/or the terminal device in the solutions provided in this application. In addition, in an optional implementation, the first device is a terminal device, and the system includes at least two terminal devices.

According to a sixth aspect, this application provides a computer-readable storage medium. The computer-readable storage medium stores a computer program. When the computer program is run, the method according to the first aspect or the second aspect is performed.

According to a seventh aspect, this application further provides a computer program product including instructions. The computer program product includes computer program code. When the computer program code is run, the method according to the first aspect or the second aspect is performed.

According to an eighth aspect, this application provides a chip system. The chip system includes a processor and an interface. The interface is configured to obtain a program or instructions, and the processor is configured to invoke the program or the instructions to implement a function related to the first aspect or the second aspect. In a possible design, the chip system further includes a memory. The memory is configured to store program instructions and data that are necessary for a terminal. The chip system may include a chip, or may include a chip and another discrete device.

### BRIEF DESCRIPTION OF DRAWINGS

FIG. 1 is a diagram of a communication system;
FIG. 2 is a diagram of another communication system;
FIG. 3 is a schematic flowchart of a signal transmission method according to an embodiment of this application;
FIG. 4 is a diagram of an auto-correlation function according to an embodiment of this application;
FIG. 5 is a diagram of an auto-ambiguity function according to an embodiment of this application;
FIG. 6 is a diagram of a cross-ambiguity function according to an embodiment of this application;
FIG. 7 is a diagram of another cross-ambiguity function according to an embodiment of this application;
FIG. 8 is a diagram of sending a synchronization signal according to an embodiment of this application;
FIG. 9 is a diagram of sending a sensing signal according to an embodiment of this application;
FIG. 10 is a diagram of another signal transmission method according to an embodiment of this application;
FIG. 11 is a diagram of another signal transmission method according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

The following describes embodiments of this application with reference to the accompanying drawings in embodiments of this application.

To better understand the signal transmission method disclosed in embodiments of this application, a communication system to which embodiments of this application are applicable is described.

Technical solutions in embodiments of this application may be applied to various communication systems, for example, a global mobile communication system, a long-term evolution (long-term evolution, LTE) system, a next-generation radio access network (next-generation radio access network, NG-RAN), a new radio (new radio, NR) system, a 5th generation (5th generation, 5G) mobile communication system, and an integrated sensing and communication system. In addition, with continuous development of communication technologies, the technical solutions in embodiments of this application may be further applied to subsequently evolved communication systems, for example, a 6th generation (6th generation, 6G) mobile communication system and a 7th generation (7th generation, 7G) mobile communication system. The technical solutions provided in embodiments of this application are further applicable to sensing and communication scenarios of networks such as an internet of vehicles, an internet of things, and an industrial internet. In addition, the technical solutions provided in embodiments of this application are applicable to communication between a network device and a terminal device, and may also be applicable to communication between terminal devices.

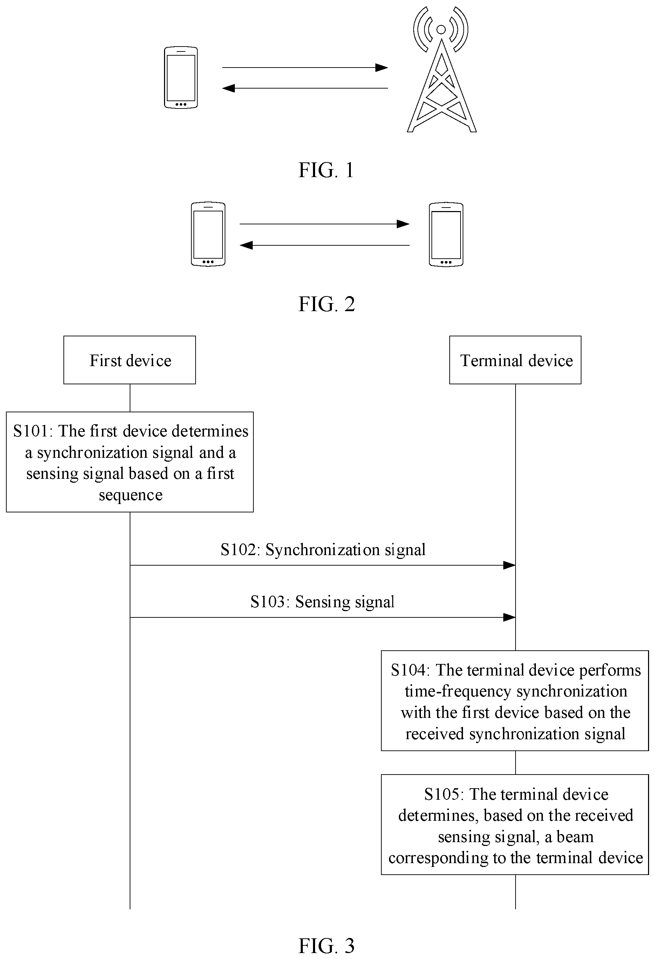

FIG. 1 is a diagram of a communication system. The communication system includes a network device and a terminal device. The terminal device and the network device may communicate with each other. A quantity and a form of devices shown in FIG. 1 are used as examples and do not constitute a limitation on embodiments of this application. During actual application, two or more terminal devices and two or more network devices may be included. In FIG. 1, an example in which the terminal device is a mobile phone and the network device is a base station is used.

FIG. 2 is a diagram of another communication system. The communication system includes at least two terminal devices. Different terminal devices may communicate with each other. A quantity and a form of devices shown in FIG. 2 are used as examples and do not constitute a limitation on embodiments of this application. During actual application, more than two terminal devices may be included. In FIG. 2, an example in which the terminal device is a mobile phone is used.

In embodiments of this application, the network device has a wireless transceiver function. The network device includes but is not limited to a base station (base station, BS), a radio network controller (radio network controller, RNC), a base station controller (base station controller, BSC), a base transceiver station (base transceiver station, BTS), a home network device (for example, a home evolved NodeB or a home NodeB, HNB), a baseband unit (baseband unit, BBU), a wireless relay node, a wireless backhaul node, a transmission and reception point (transmission and reception point, TRP; or transmission point, TP), a transceiver node, a relay device, or a small cell, a micro base station, or the like that has a base station function. The base station is an apparatus that can provide a wireless communication function and that is deployed in a radio access network. The base station may also be referred to as a base station device, for example, an evolved NodeB (evolved NodeB, eNB or e-NodeB) in a long-term evolution (long-term evolution, LTE) system, a NodeB (NodeB), a base station (gNodeB or gNB) in a 5G system, a base station in a 6G system, or a base station in a future communication system. The base station may include a BBU and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components in a rack. The base station may be in the following forms: a macro base station, a micro base station (also referred to as a small cell), a pico base station, a relay station, an access point, a balloon station, and the like.

The terminal device may also be referred to as user equipment (user equipment, UE), a terminal (terminal), an access terminal, a subscriber unit (subscriber unit), a subscriber station, a mobile station, a mobile station (mobile station, MS), a remote station, a remote terminal, a mobile device, a user terminal, a user agent, or a user apparatus, and may be used in a 4G, 5G, or even 6G system. The terminal device in embodiments of this application may be a handheld device, a vehicle-mounted device, a wearable device, or a compute device that has a wireless communication function, or another processing device connected to a wireless modem. The terminal device may be a terminal that has a function of connecting to a cellular base station. For example, the terminal device may be a cellular phone (cellular phone), a smartphone (smartphone), a tablet computer (Pad), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, or the like. The terminal device may alternatively be a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a wireless communication device in an intelligent factory, or the like.

Then, related concepts in embodiments of this application are briefly described.

### 1. Auto-correlation function (auto-correlation function, ACF)

The auto-correlation function describes the degree of correlation between a signal and a delayed version of the signal. A variable of the auto-correlation function is the delay time applied to a signal. The delay time may also be referred to as a time shift. For ease of description, the term "time shift" is used throughout this specification. A time shift of 0 indicates that no delay is applied to the signal, whereas a non-zero time shift indicates that the signal is delayed.

For example, if a signal is represented as a sequence S(t), its auto-correlation function *R(c)* is shown in Formula (1) below: $R \left(c\right) = {\sum }_{t = - ∞}^{+ ∞} S \left(t\right) ⋅ S * \left(t+c\right)$

Here, c is the time shift, *S**(*t +* c) is the conjugate sequence of *S*(*t + c),* and *S*(*t + c)* is the sequence obtained by delaying S(t) by c time units.

It may be understood that an element in the sequence may be a complex number. A complex number is of the form *a + bi,* where *a* is the real part, *b* is the imaginary part, *i* is the imaginary unit, and *a* and *b* are both real numbers. The conjugate of a complex number is a new complex number obtained by negating the imaginary part and combining it with the real part. For example, for z *= a + bi,* its conjugate is z* *= a - bi.* The conjugate sequence of a sequence is a new sequence obtained by negating the imaginary part of each element in the sequence and combining it with the real part. For example, for a sequence [*a*₁ *+ b*₁*i, a₂ + b*₂*i, a*₃ *+ b*₃*i*], its conjugate sequence is [*a*₁ *- b*₁*i, a*₂ *- b*₂*i, a*₃ *- b*₃*i*]*.*

The following describes embodiments of this application in detail with reference to the accompanying drawings. In embodiments of this application, an example in which a first device and a terminal device are used as execution bodies of interaction examples is used to illustrate a corresponding method. The first device is a network device or a terminal device. When the first device is a terminal device, execution bodies of interaction in the method are different terminal devices. However, an execution body of the method is not limited in this application. For example, the first device in the method may alternatively be a chip, a chip system, or a processor that supports the first device in implementing a corresponding method, or may be a logical module or software that can implement all or some functions of the first device. Alternatively, the terminal device in the method may be a chip, a chip system, or a processor that supports the terminal device in implementing a corresponding method, or may be a logical module or software that can implement all or some functions of the terminal device.

FIG. 3 is a schematic flowchart of a signal transmission method according to an embodiment of this application. The signal transmission method includes the following steps.

S101: A first device determines a synchronization signal and a sensing signal based on a first sequence.

A frequency offset value, relative to the first sequence, of the synchronization signal is different from that of the sensing signal, which helps distinguish between the synchronization signal and the sensing signal. An auto-correlation function of the first sequence has a value of 0 for a non-zero time shift, and an auto-ambiguity (auto-ambiguity function, AAF) of the first sequence has a unique peak.

It may be understood that, that the auto-correlation function of the first sequence has a value of 0 for a non-zero time shift is a feature that the first sequence has a perfect auto-correlation function. The first sequence may also be referred to as a perfect sequence. For example, a length of the first sequence is *l,* the first sequence is [*k*₀, *k*₁, *..., k*_{*l*-1}]*,* and *l* is an integer greater than 1. That the first sequence has the perfect auto-correlation function may be represented as follows: The first sequence satisfies Formula (2): ${\sum }_{n = 0}^{l - 1} {k}_{\left(n\right) mod \left(l\right)} ⋅ {k}_{\left(n+c\right) mod \left(l\right)}^{∗} = \left\{\begin{matrix}{\sum }_{n = 0}^{l - 1} {\left|{k}_{n}\right|}^{2} & c = 0 \\ 0 & 0 < c < l\end{matrix}\right.$

*mod* is a modulo function, (*n*)*mod*(*l*) is a remainder obtained by dividing *n* by *l,* (n + *c) mod*(*l*) is a remainder obtained by dividing (n + c) by *l,* ${k}_{\left(n+c\right) mod \left(l\right)}^{∗}$ is a conjugate of *k*_{(*n+c*)*mod*(*l*)}*,* and c is a time shift.

In addition, in embodiments of this application, for any sequence S = {*sₜ*}_{0≤*t*≤*r*-1} *=* [*s*₀, *s*₁, ... , *s*_{*r*-1}], when the sequence S satisfies Formula (3), it is considered that the sequence S has a perfect auto-correlation function. In this case, the sequence S may also be referred to as a perfect sequence. Details are not described below. ${\sum }_{t = 0}^{r - 1} {s}_{\left(t\right) mod \left(r\right)} ⋅ {s}_{\left(t+c\right) mod \left(r\right)}^{∗} = \left\{\begin{matrix}{\sum }_{t = 0}^{r - 1} {\left|{s}_{t}\right|}^{2} & c = 0 \\ 0 & 0 < c < r\end{matrix}\right.$

*mod* is a modulo function, *(t)mod(r)* is a remainder obtained by dividing *t by r, (t + c) mod(r)* is a remainder obtained by dividing *(t +* c) by *r,* ${s}_{\left(t+c\right) mod \left(r\right)}^{∗}$ is a conjugate of *s*_{(*t*+*c*)*mod*(*r*)}*,* and c is a time shift.

In an optional implementation, the first sequence is obtained by performing discrete Fourier transform (discrete Fourier transform, DFT) on a modulated m-sequence. In this case, the first sequence may also be referred to as a frequency domain m-sequence. The m-sequence is generated based on any d (where d is an integer greater than or equal to 1) initial values that are not all 0s by using a recursive formula corresponding to *p*(*x*), and p(x) is a primitive polynomial of degree *d* on a binary Galois field (Galois field, GF) (namely, GF(2)), where p(x) is shown in Formula (4): $p \left(x\right) = {p}_{d} {x}^{d} + {p}_{d - 1} {x}^{d - 1} + ⋯ + {p}_{1} x + {p}_{0}$

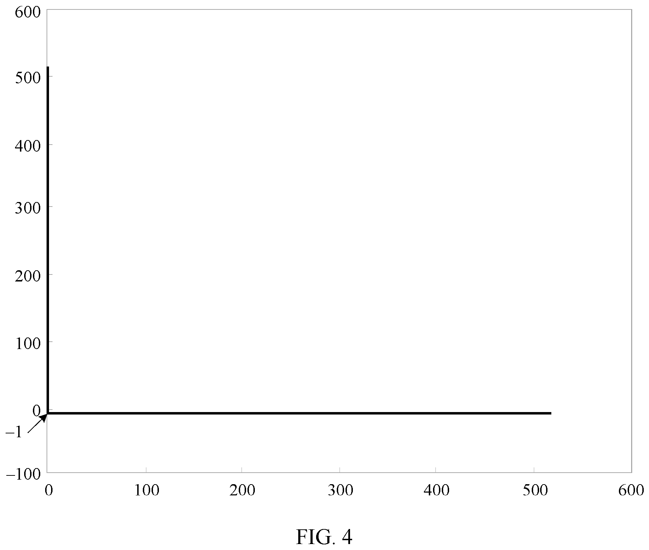

The m-sequence has the following properties:
(1) A period of the m-sequence is 2*^{d}* - 1.
(2) Auto-correlation function of the modulated m-sequence has a value of -1 for a non-zero time shift, as shown in FIG. 4.
(3) The m-sequence is a constant modulus sequence, and a sequence obtained by performing Fourier transform on the m-sequence has a perfect auto-correlation function.
(4) A sequence generated by performing DFT on the modulated m-sequence has a perfect auto-correlation function.
(5) An ambiguity function of the m-sequence is similar to linear frequency modulation (linear frequency modulation, LFM), and has an anti-Doppler (Doppler) property. Doppler effect means that a signal is transmitted to a moving physical object, and a frequency of a signal reflected back by the physical object changes. The ambiguity function can be used to analyze impact of a time delay and the Doppler effect on radar echo signals. For example, an auto-ambiguity function *F*(*τ*, *f*) of a signal *s*(*t*) is shown in Formula (5) below: $F \left(τ, f\right) = {\int }_{- ∞}^{+ ∞} s \left(t\right) s * \left(t-τ\right) exp \left(j2πft\right) dt$

*τ* is a time shift corresponding to the auto-ambiguity function, *f* is a frequency corresponding to the auto-ambiguity function, *exp* is an exponential function with a natural constant e as a base, *j* is an imaginary unit, and *s*∗(*t* - *τ*) is a conjugate of *s*(*t* - *τ*).

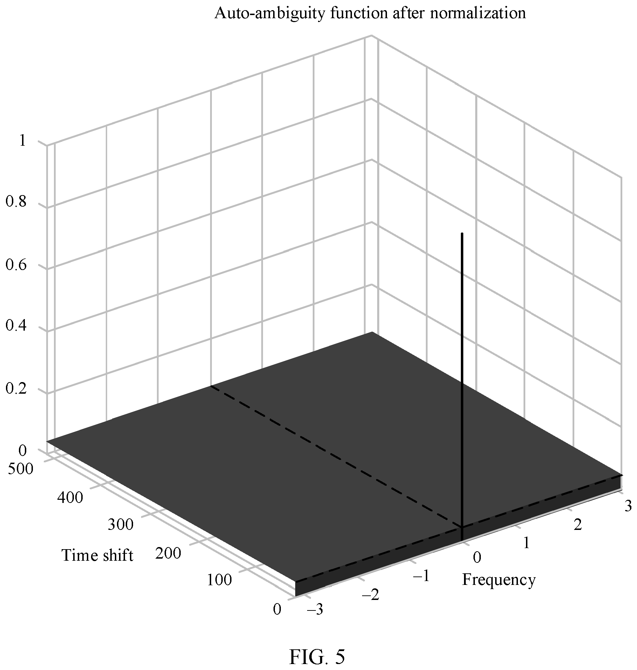

In addition, an auto-ambiguity function of the m-sequence has a unique peak, and an auto-ambiguity function of a sequence obtained by performing DFT on the modulated m-sequence also has a unique peak. It can be learned that the sequence obtained by performing DFT on the modulated m-sequence is used as the first sequence, so that the auto-ambiguity function of the first sequence can have the unique peak. For example, the m-sequence with a period being 511 is used. FIG. 5 is a diagram after the auto-ambiguity function of the m-sequence is normalized. It can be learned that the auto-ambiguity function of the m-sequence has a unique peak when a time shift is 0 and a frequency is 0.

In an optional implementation, the frequency offset value, relative to the first sequence, of the synchronization signal is an odd multiple of a first parameter, and the frequency offset value, relative to the first sequence, of the sensing signal is an even multiple of the first parameter; or the frequency offset value, relative to the first sequence, of the synchronization signal is an even multiple of a first parameter, and the frequency offset value, relative to the first sequence, of the sensing signal is an odd multiple of the first parameter, where the first parameter is determined based on a maximum moving speed of an object within a cell.

For example, a length of the first sequence is equal to *l*. The first parameter may be shown in Formula (6): $\frac{2 π}{l} \times \left⌈\frac{l}{2 \times N}\right⌉$$\left⌈\frac{l}{2 \times N}\right⌉$ represents rounding up $\frac{l}{2 \times N}$, *N* represents a quantity of values of ${N}_{ID}^{\left(2\right)}$, and ${N}_{ID}^{\left(2\right)}$ is a cell identity (identity, ID). For example, a value of ${N}_{ID}^{\left(2\right)}$ can be 0, 1, or 2, and *N* is equal to 3. In addition, N is determined based on the maximum moving speed of the object in the cell range, and N makes Formula (6) satisfy the following: A value obtained through calculation in Formula (6) is greater than or equal to 2F, where F is a Doppler shift caused by the maximum moving speed of the object in the cell range.

Correspondingly, the frequency offset value *θ*_{*u*₁}, relative to the first sequence, of the synchronization signal may be shown in Formula (7), and the frequency offset value *θ*_{*u*₂}, relative to the first sequence, of the sensing signal may be shown in Formula (8): ${θ}_{{u}_{1}} = {u}_{1} \times \frac{2 π}{l} \times \left⌈\frac{l}{2 \times N}\right⌉$ ${θ}_{{u}_{2}} = {u}_{2} \times \frac{2 π}{l} \times \left⌈\frac{l}{2 \times N}\right⌉$

*u*₁ is an odd number, and *u*₂ is an even number. Alternatively, *u*₁ is an even number, and *u*₂ is an odd number. For example, in *u*₂ *= u*₁ + 1, *u*₁ and *u*₁ + 1 have opposite parities.

In an optional implementation, frequency offset values of different sensing signals relative to the first sequence are the same. In this embodiment of this application, the different sensing signals may be, for example, sensing signals sent on different beams.

In an optional implementation, cyclic shift values of the different sensing signals relative to the first sequence are different, which helps distinguish between the different sensing signals. Optionally, the cyclic shift values of the different sensing signals relative to the first sequence are different integer multiples of a second parameter, and the second parameter is determined based on a maximum delay from sending a signal to receiving a reflected signal corresponding to the signal by the first device.

For example, a maximum delay from sending a signal to receiving a reflected signal corresponding to the signal by the first device within a sensing and communication range is duration corresponding to *p*₁ symbols in the first sequence. The second parameter is set to *p*₁, and a cyclic shift value, relative to the first sequence, of the sensing signal is *v* × *p*₁, where v is a positive integer. Different values v may be set for the different sensing signals, to distinguish between the different sensing signals. For example, if *v* = 1 is set for a sensing signal #1 and *v* = 2 is set for a sensing signal #2, a cyclic shift value of the sensing signal #1 relative to the first sequence is *p*₁, and a cyclic shift value of the sensing signal #2 relative to the first sequence is 2*p*₁.

In an optional implementation, that the first device determines the synchronization signal and the sensing signal based on the first sequence includes: The first device performs frequency offset processing and cyclic shift processing on the first sequence, to determine the synchronization signal and the sensing signal. In a process in which the first device performs frequency offset processing on the first sequence, a frequency offset value used for the synchronization signal is different from that used for the sensing signal. Optionally, in a process in which the first device performs frequency offset processing on the first sequence, frequency offset values used for the different sensing signals are the same. Optionally, in a process in which the first device performs cyclic shift processing on the first sequence, cyclic shift values used for the different sensing signals are different.

In an optional implementation, this embodiment of this application further provides a sequence construction manner. Specifically, for any sequence S = [*s*₀, *s*₁, ... , *s*_{*r*-1}], where r is an integer greater than 1, a sequence ${S}_{q}^{δ}$ may be obtained through construction based on Formula (9) below: ${S}_{q}^{δ} \left(t\right) = {s}_{\left(t+q\right) mod \left(r\right)} \times exp \left(j\times t\times δ\right) , where t = 0 , 1 , … , r - 1$

*q is* an integer, and r × *δ* is an integer multiple of 2π. *mod* is a modulo function, and *(t* + *q*)*mod*(*r*) is a remainder obtained by dividing (t *+ q)* by r. A relationship between ${S}_{q}^{δ}$ and S is as follows:
(1) A magnitude of an auto-correlation function of ${S}_{q}^{δ}$ is the same as a magnitude of an auto-correlation function of S. It may be understood that a value of the auto-correlation function is a complex number. A magnitude of the complex number is a distance from a point of the complex number on a complex plane to an origin. For example, a magnitude of a complex number z *= a + bi* is equal to $\sqrt{{a}^{2} + {b}^{2}}$*.* For specific descriptions of the complex number, refer to the foregoing related descriptions. Details are not described again.
(2) Let *δ* = *δ*₁ and q = *q*₁ to obtain ${S}_{{q}_{1}}^{{δ}_{1}}$; and let *δ* = *δ*₂ and q = *q*₂ to obtain ${S}_{{q}_{2}}^{{δ}_{2}}$*,* where *δ*₁ ≠ *δ*₂ and *q*₁ ≠ *q*₂*.* A cross-ambiguity function of ${S}_{{q}_{1}}^{{δ}_{1}}$ and ${S}_{{q}_{2}}^{{δ}_{2}}$ is obtained by translating an auto-ambiguity function of S on a plane *τ - f* by a vector (*q*₁ *- q*₂, *δ*₁ - *δ*₂).

Optionally, in the foregoing sequence construction manner, the first device may determine the synchronization signal and the sensing signal based on the first sequence. Specifically, an example in which the first sequence is [*k*₀, *k*₁, *..., k*_{*l*-1}] and *l* is an integer greater than 1 is used. The first device may determine the synchronization signal and the sensing signal based on the first sequence and Formula (10) below. It may be understood that the first device may perform frequency offset processing and cyclic shift processing on the first sequence based on Formula (10) below, to obtain the sequence ${B}_{p}^{θ}$, where a corresponding frequency offset value when the sequence ${B}_{p}^{θ}$ is a synchronization signal is different from that when the sequence ${B}_{p}^{θ}$ is a sensing signal: ${B}_{p}^{θ} \left(n\right) = {k}_{\left(n+p\right) mod \left(l\right)} \times exp \left(j\times n\times θ\right) , where n = 0 , 1 , … , l - 1$

p is the cyclic shift value, and *k*_{(*n+p*)*mod*(*l*)} indicates that cyclic shift processing is performed on the first sequence. *θ* is the frequency offset value, and *k*_{(*n+p*)*mod*(*l*)} is multiplied by *exp(j* × *n* × *θ*), indicating that frequency offset processing is performed on the first sequence. *exp* is an exponential function with a natural constant e as a base. *mod* is a modulo function, and (n + *p*)*mod*(*l*) is a remainder obtained by dividing (n + p) by *l*. The first sequence may also be referred to as an m-sequence having two-dimensional parameters (a two-dimensional m-sequence for short), where the two-dimensional parameters are a frequency offset value and a cyclic shift value.

Because the first sequence has the perfect auto-correlation function and its auto-ambiguity function has a unique peak, ${B}_{p}^{θ}$ obtained based on Formula (10) has the following properties:
(1) ${B}_{p}^{θ}$ has a perfect auto-correlation function.
(2) Let *θ* = *θ*₁ and p = *p*₁ to obtain ${B}_{{p}_{1}}^{{θ}_{1}}$; and let *θ* = *θ*₂ and p = *p*₂ to obtain ${B}_{{p}_{2}}^{{θ}_{2}}$, where *θ*₁ ≠ *θ*₂ and *p*₁ ≠ *p*₂. The cross-ambiguity function of ${B}_{{p}_{1}}^{{θ}_{1}}$ and ${B}_{{p}_{2}}^{{θ}_{2}}$ is obtained by translating the auto-ambiguity function of the first sequence on a plane *τ* - f by a vector (*p*₁ - *p*₂, *θ*₁ - *θ*₂), and the cross-ambiguity function of ${B}_{{p}_{1}}^{{θ}_{1}}$ and ${B}_{{p}_{2}}^{{θ}_{2}}$ has a unique peak.

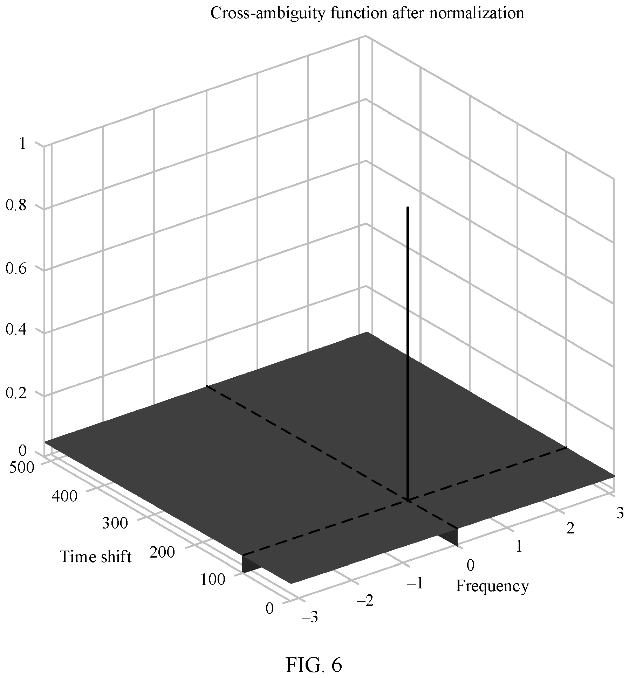

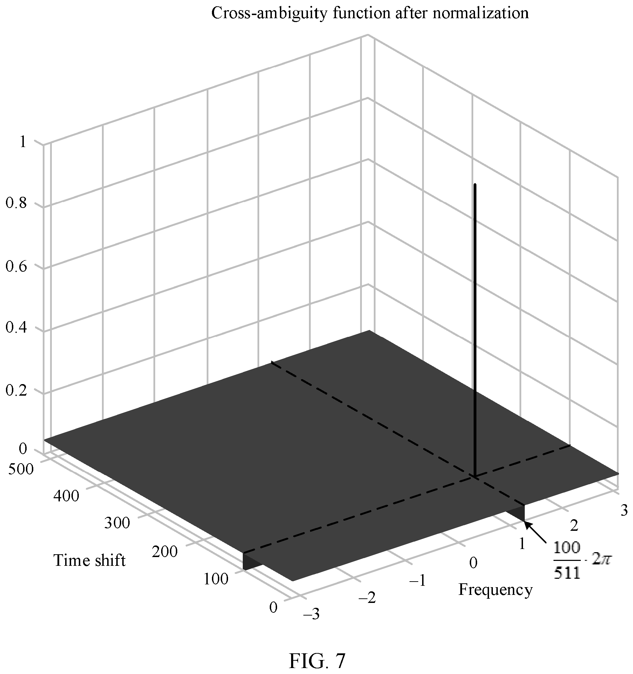

For example, an m-sequence generated based on *p(x) = x*⁹ *+ x*⁴ *+* 1 has a length of 511. FIG. 5 shows the auto-ambiguity function of a first sequence B obtained by performing DFT on the modulated m-sequence. For example, assuming that *θ*₁ = 0, *p*₁ = 100, ${θ}_{2} = \frac{100}{511} ⋅ 2 π$, and *p*₂ = 0, FIG. 6 shows a normalized cross-ambiguity function of B and ${B}_{100}^{0}$, and FIG. 7 shows a normalized cross-ambiguity function of ${B}_{100}^{0}$ and ${B}_{0}^{\frac{100}{511} ⋅ 2 π}$. It can be learned that the auto-ambiguity function of B has a unique peak when the time shift is 0 and the frequency is 0, the cross-ambiguity function of B and ${B}_{100}^{0}$ has a unique peak when the time shift is 100 and the frequency is 0, and the cross-ambiguity function of ${B}_{100}^{0}$ and ${B}_{0}^{\frac{100}{511} ⋅ 2 π}$ has a unique peak when the time shift is 100 and the frequency is $\frac{100}{511} ⋅ 2 π$.

By determining the synchronization signal and the sensing signal based on the first sequence and Formula (10), the first device ensures that the auto-correlation function of the synchronization signal has a value of 0 for a non-zero time shift and that the auto-ambiguity function of the synchronization signal has a unique peak; similarly, the auto-correlation function of the sensing signal has a value of 0 for a non-zero time shift, and the auto-ambiguity function of the sensing signal has a unique peak.

For example, based on Formula (10), if p = 0 and *θ* = *θ*_{*u*₁} are set for the synchronization signal, the determined synchronization signal ${B}_{0}^{{θ}_{{u}_{1}}}$ is shown in Formula (11); if p *= v* × *p*₁ and *θ* = *θ*_{*u*₂} are set for the sensing signal, the determined sensing signal ${B}_{v \times {p}_{1}}^{{θ}_{{u}_{2}}}$ is shown in Formula (12): ${B}_{0}^{{θ}_{{u}_{1}}} \left(n\right) = {k}_{\left(n\right) mod \left(l\right)} \times exp \left({jnθ}_{{u}_{1}}\right) , where n = 0 , 1 , … , l - 1$ ${B}_{v \times {p}_{1}}^{{θ}_{{u}_{2}}} \left(n\right) = {k}_{\left(n+v\times {p}_{1}\right) mod \left(l\right)} \times exp \left({jnθ}_{{u}_{2}}\right) , where n = 0 , 1 , … , l - 1$

Here, *θ*_{*u*₁} is, for example, as shown in Formula (7), and *θ*_{*u*₂} is, for example, as shown in Formula (8).

In addition, for different sensing signals can be distinguished by setting different values of v. For example, based on Formula (12), p = *p*₁ is set for the sensing signal #1, p = 2*p*₁ is set for the sensing signal #2, and p = 3*p*₁ is set for a sensing signal #3. In this case, the sensing signal #1, namely, ${B}_{{p}_{1}}^{{θ}_{{u}_{2}}}$*,* may be shown in Formula (13), the sensing signal #2, namely, ${B}_{2 {p}_{1}}^{{θ}_{{u}_{2}}}$*,* may be shown in Formula (14), and the sensing signal #3, namely, ${B}_{3 {p}_{1}}^{{θ}_{{u}_{2}}}$, may be shown in Formula (15): ${B}_{{p}_{1}}^{{θ}_{{u}_{2}}} \left(n\right) = {k}_{\left(n+{p}_{1}\right) mod \left(l\right)} \times exp \left({jnθ}_{{u}_{2}}\right) , where n = 0 , 1 , … , l - 1$ ${B}_{2 {p}_{1}}^{{θ}_{{u}_{2}}} \left(n\right) = {k}_{\left(n+2{p}_{1}\right) mod \left(l\right)} \times exp \left({jnθ}_{{u}_{2}}\right) , where n = 0 , 1 , … , l - 1$ ${B}_{3 {p}_{1}}^{{θ}_{{u}_{2}}} \left(n\right) = {k}_{\left(n+3{p}_{1}\right) mod \left(l\right)} \times exp \left({jnθ}_{{u}_{2}}\right) , where n = 0 , 1 , … , l - 1$

S102: The first device sends the synchronization signal; and correspondingly, a terminal device receives the synchronization signal.

Optionally, the synchronization signal is a primary synchronization signal (primary synchronization signal, PSS).

S103: The first device sends the sensing signal; and correspondingly, the terminal device receives the sensing signal.

Optionally, the sensing signal may further carry some information to enhance a communication capability of the terminal device, for example, carry indication information indicating a capability of the first device, and/or carry indication information indicating load of the first device. Information that may be further carried in the sensing signal is not limited in this application.

In an optional implementation, that the first device sends the sensing signal includes: The first device sends the sensing signal on each of a plurality of first beams, where cyclic shift values, relative to the first sequence, of the sensing signals sent on different first beams among the plurality of first beams are different. For example, the first beam may also be referred to as a sensing beam, and the sensing beam is used to transmit the sensing signal. In this embodiment of this application, that two beams are different may be understood as follows: Coverage areas of the two beams are different or are not completely the same, or beam directions of the two beams are different. In addition, for a case in which the sensing signal and the synchronization signal are sent in separate steps, the two different beams may be understood as two different synchronization beams, or may be understood as two different sensing beams. The synchronization beam is used to transmit a synchronization signal.

For example, the first device sends the sensing signal #1 on a first beam #1, sends the sensing signal #2 on a first beam #2, and sends the sensing signal #3 on a first beam #3. The sensing signal #1, the sensing signal #2, and the sensing signal #3 have a same frequency offset value relative to the first sequence, and the sensing signal #1, the sensing signal #2, and the sensing signal #3 have different cyclic shift values relative to the first sequence. For example, the sensing signal #1 is shown in Formula (13), the sensing signal #2 is shown in Formula (14), and the sensing signal #3 is shown in Formula (15).

Optionally, the different first beams among the plurality of first beams have different coverage areas; and a coverage area of each of the plurality of first beams falls within a coverage area of a second beam, and the second beam is a beam used by the first device to send the synchronization signal. It may be understood that the first beam is more refined than the second beam. That is, energy of the first beam is more centralized than that of the second beam. Sending the synchronization signal on the second beam helps improve efficiency, and sending the sensing signal on the first beam helps provide more accurate sensing performance. In addition, in this embodiment of this application, that the coverage area of the first beam belongs to the coverage area of the second beam may be understood as that a part or all of the coverage area of the first beam belongs to the coverage area of the second beam. In addition, the second beam may also be referred to as, for example, a synchronization beam.

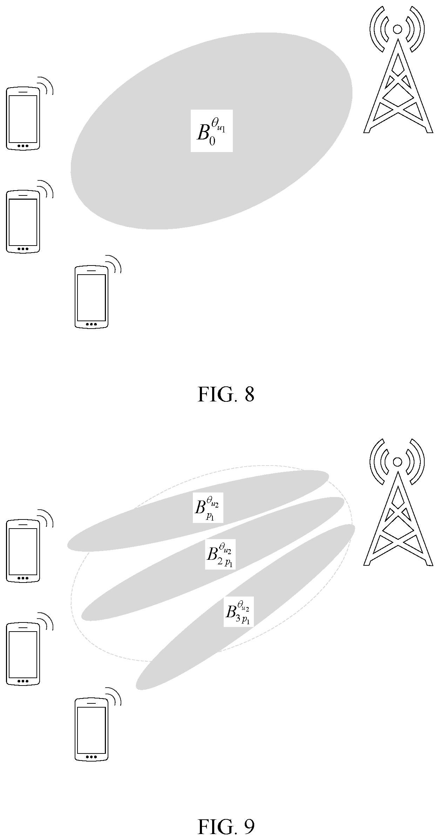

For example, with reference to FIG. 8, the first device sends the synchronization signal on the second beam. With reference to FIG. 9, in the coverage area of the second beam (where the second beam is represented by using an ellipse pattern with gray dashed lines in FIG. 9), the first device respectively sends sensing signals on three first beams. In FIG. 8 and FIG. 9, an example in which the first device is a base station and the terminal device is a mobile phone is used for illustration. In FIG. 8 and FIG. 9, a gray-filled elliptic pattern is used to represent a beam. The synchronization signal sent by the first device on the second beam is ${B}_{0}^{{θ}_{{u}_{1}}}$ shown in Formula (11), and the sensing signals respectively sent on the three first beams are sequentially ${B}_{{p}_{1}}^{{θ}_{{u}_{2}}}$ shown in Formula (13), ${B}_{2 {p}_{1}}^{{θ}_{{u}_{2}}}$ shown in Formula (14), and ${B}_{3 {p}_{1}}^{{θ}_{{u}_{2}}}$ shown in Formula (15).

In an optional implementation, the first device alternately sends the synchronization signal and the sensing signal. It may be understood that the first device alternately sends the synchronization signal and the sensing signal on a time domain resource. For example, the first device sends a synchronization signal in a time period #1, sends a sensing signal in a time period #2, sends a synchronization signal in a time period #3, and sends a sensing signal in a time period #4. The time period #1 is earlier than the time period #2, the time period #2 is earlier than the time period #3, and the time period #3 is earlier than the time period #4.

S104: The terminal device performs time-frequency synchronization with the first device based on the received synchronization signal.

That the terminal device performs time-frequency synchronization with the first device may be understood as that the terminal device performs time domain synchronization and frequency domain synchronization with the first device. In addition, optionally, step S104 is performed before the terminal device receives the sensing signal. That is, after performing time-frequency synchronization with the first device based on the synchronization signal, the terminal device receives the sensing signal. This helps reduce an error of the sensing signal received by the terminal device, and improve accuracy of the sensing signal received by the terminal device.

S105: The terminal device determines, based on the received sensing signal, a beam corresponding to the terminal device.

It may be understood that the terminal device determines the beam corresponding to the terminal device, so that the terminal device can subsequently communicate with the first device more accurately based on the corresponding beam, thereby improving communication quality. Optionally, when the synchronization signal is a primary synchronization signal, in step S104, the terminal device performs primary synchronization with the first device based on the primary synchronization signal. Then, the terminal device receives the sensing signal, and uses the beam determined in step S105 to assist the terminal device in performing secondary synchronization with the first device, thereby improving synchronization quality.

Optionally, that the terminal device determines the beam corresponding to the terminal device includes: The terminal device determines a frequency offset value and/or a cyclic shift value corresponding to the terminal device, where there is a correspondence between the frequency offset value and/or the cyclic shift value corresponding to the terminal device and the beam corresponding to the terminal device. In addition, the beam corresponding to the terminal device may also be understood as a beam on which the terminal device is located.

In an optional implementation, after the terminal device receives the signal, the method further includes: The terminal device determines, based on the frequency offset value, relative to the first sequence, of the received signal, whether the received signal is a synchronization signal or a sensing signal.

Optionally, that the terminal device determines, based on the frequency offset value, relative to the first sequence, of the received signal, whether the received signal is the synchronization signal or the sensing signal includes: The terminal device determines, based on the frequency offset value, relative to the first sequence, of the received signal and the first parameter, whether the received signal is the synchronization signal or the sensing signal. The first parameter is determined based on the maximum moving speed of the object within the cell range. For specific descriptions of the first parameter, refer to the foregoing related descriptions. Details are not described again. In addition, the first parameter may be preconfigured in the terminal device and the first device or may be sent by the first device to the terminal device, or the first parameter may be agreed upon between the terminal device and the first device in another manner. This is not limited.

For example, in a case in which the frequency offset value, relative to the first sequence, of the synchronization signal is an odd multiple of the first parameter, and the frequency offset value, relative to the first sequence, of the sensing signal is an even multiple of the first parameter, when the frequency offset value, relative to the first sequence, of the received signal is an odd multiple of the first parameter, the terminal device determines that the received signal is a synchronization signal, or when the frequency offset value, relative to the first sequence, of the received signal is an even multiple of the first parameter, the terminal device determines that the received signal is a sensing signal.

For example, in a case in which the frequency offset value, relative to the first sequence, of the synchronization signal is an even multiple of the first parameter, and the frequency offset value, relative to the first sequence, of the sensing signal is an odd multiple of the first parameter, when the frequency offset value, relative to the first sequence, of the received signal is an even multiple of the first parameter, the terminal device determines that the received signal is a synchronization signal, or when the frequency offset value, relative to the first sequence, of the received signal is an odd multiple of the first parameter, the terminal device determines that the received signal is a sensing signal.

In an optional implementation, after the terminal device receives the signal, the method further includes: The terminal device determines, based on the frequency offset value, relative to the first sequence, of the received signal, whether the received signal is a synchronization signal. If the terminal device determines that the received signal is a synchronization signal, the terminal device performs time-frequency synchronization with the first device based on the synchronization signal, and a signal received next time by the terminal device is a sensing signal by default, the terminal device determines, based on the received signal, the beam corresponding to the terminal device after receiving the signal next time.

If the terminal device determines that the received signal is not a synchronization signal, the terminal device waits to receive a signal from the first device again and repeatedly performs for the signal received again: an operation of determining, based on the frequency offset value, relative to the first sequence, of the received signal, whether the received signal is a synchronization signal until the terminal device determines that a received signal is a synchronization signal, the terminal device performs time-frequency synchronization with the first device based on the synchronization signal, and a signal received next time is a sensing signal by default, the terminal device determines, based on the received signal, the beam corresponding to the terminal device after receiving the signal next time. This implementation may be applied to a scenario in which the first device alternately sends the synchronization signal and the sensing signal.

For example, a signal received by the terminal device from the first device for a 1^{st} time is a signal #1, and the terminal device determines, based on a frequency offset value of the signal #1 relative to the first sequence, whether the signal #1 is a synchronization signal. If the terminal device determines that the signal #1 is a synchronization signal, the terminal device performs time-frequency synchronization with the first device based on the signal #1, and a signal received by the terminal device from the first device for a 2^{nd} time is a signal #2, the terminal device considers the signal #2 as a sensing signal by default, and determines, based on the signal #2, the beam corresponding to the terminal device.

If the terminal device determines that the signal #1 is not a synchronization signal, and the signal received by the terminal device from the first device for the 2^{nd} time is the signal #2, the terminal device determines, based on a frequency offset value of the signal #2 relative to the first sequence, whether the signal #2 is a synchronization signal. If the terminal device determines that the signal #2 is not a synchronization signal, and a signal received by the terminal device from the first device for a 3^{rd} time is a signal #3, the terminal device determines, based on a frequency offset value of the signal #3 relative to the first sequence, whether the signal #3 is a synchronization signal. If the terminal device determines that the signal #3 is a synchronization signal, the terminal device performs time-frequency synchronization with the first device based on the signal #3, and a signal received by the terminal device from the first device for a 4^{th} time is a signal #4, the terminal device considers the signal #4 as a sensing signal by default, and determines, based on the signal #4, the beam corresponding to the terminal device.

For example, in a scenario in which the frequency offset value, relative to the first sequence, of the synchronization signal is an odd multiple of the first parameter, when the frequency offset value, relative to the first sequence, of the received signal is an odd multiple of the first parameter, the terminal device determines that the received signal is a synchronization signal.

For example, in a scenario in which the frequency offset value, relative to the first sequence, of the synchronization signal is an even multiple of the first parameter, when the frequency offset value, relative to the first sequence, of the received signal is an even multiple of the first parameter, the terminal device determines that the received signal is a synchronization signal.

In addition, in an optional implementation, when the signal received by the terminal device is a sensing signal, that the terminal device determines the beam corresponding to the terminal device includes: The terminal device determines that the frequency offset value corresponding to the terminal device is the frequency offset value, relative to the first sequence, of the sensing signal, where there is a correspondence between the frequency offset value corresponding to the terminal device and the beam corresponding to the terminal device.

In an optional implementation, that the terminal device determines, based on the received sensing signal, the beam corresponding to the terminal device includes: The terminal device determines, from the plurality of first beams based on the cyclic shift value, relative to the first sequence, of the received sensing signal, the beam corresponding to the terminal device. This implementation may be applied to a scenario in which the cyclic shift values, relative to the first sequence, of the sensing signals sent by the first device on the different first beams among the plurality of first beams are different. In addition, the first beam may also be referred to as a sensing beam. Optionally, that the terminal device determines, from the plurality of first beams based on the cyclic shift value, relative to the first sequence, of the received sensing signal, the beam corresponding to the terminal device includes: The terminal device determines, from the plurality of first beams based on the cyclic shift value, relative to the first sequence, of the received sensing signal and the second parameter, the beam corresponding to the terminal device. The second parameter is determined based on the maximum delay from sending the signal to receiving the reflected signal corresponding to the signal by the first device. For specific descriptions of the second parameter, refer to the foregoing related descriptions. Details are not described again. This implementation may be applied to a scenario in which the cyclic shift values, relative to the first sequence, of the sensing signals sent by the first device on the different first beams among the plurality of first beams are different integer multiples of the second parameter. In addition, the second parameter may be preconfigured in the terminal device and the first device or may be sent by the first device to the terminal device, or the second parameter may be agreed upon between the terminal device and the first device in another manner. This is not limited.

It may be understood that, due to propagation delay, there is a deviation between the cyclic shift value, relative to the first sequence, of the sensing signal sent by the first device and that of the sensing signal received by the terminal device. For example, the maximum delay from sending a signal to receiving its reflected signal within the sensing and communication range of the first device corresponds to *p*₁ symbols in the first sequence. The second parameter is set to *p*₁, and the cyclic shift value, relative to the first sequence, of the sensing signal sent by the first device is *v* × *p*₁, where *v* is a positive integer. The cyclic shift value, relative to the first sequence, of the sensing signal received by the terminal device is *v* × *p*₁ + *g*, where *g* is a positive integer less than *p*₁ and represents the shift caused by propagation delay within the sensing and communication range of the first device. Since the propagation delay cannot exceed a predefined maximum delay, the shift caused by the propagation delay cannot exceed *p*₁ . The cyclic shift value corresponding to the terminal device is *v* × *p*₁, and there is a correspondence between *v* × *p*₁ and the beam corresponding to the terminal device.

In an optional implementation, the terminal device prestores, for each of the plurality of first beams, a corresponding multiple, where the multiple for each first beam is a ratio-quantized by the second parameter-of a cyclic shift value, relative to the first sequence, of a sensing signal sent by the first device on the first beam. The multiple corresponding to the first beam associated with the terminal device is equal to a first value, where the first value is obtained by dividing the cyclic shift value, relative to the first sequence, of the sensing signal received by the terminal device by the second parameter and then rounding down the result.

In another optional implementation, the terminal device prestores, for each of the plurality of first beams, a corresponding cyclic shift value, where the cyclic shift value for each first beam is a cyclic shift value, relative to the first sequence, of a sensing signal sent by the first device on the first beam. Among the plurality of first beams, a cyclic shift value corresponding to the first beam associated with the terminal device is less than the cyclic shift value, relative to the first sequence, of the received sensing signal, and the cyclic shift value corresponding to the first beam associated with the terminal device is closest to the cyclic shift value, relative to the first sequence, of the received sensing signal.

For example, the maximum delay from sending a signal to receiving its reflected signal within a sensing and communication range of the first device corresponds to a duration of *p*₁ symbols in the first sequence, and the second parameter is set to *p*₁. The cyclic shift value, relative to the first sequence, of the sensing signal #1 sent by the first device on the first beam #1 is *p*₁, the cyclic shift value, relative to the first sequence, of the sensing signal #2 sent on the first beam #2 is 2*p*₁, and the cyclic shift value, relative to the first sequence, of the sensing signal #3 sent on the first beam #3 is 3*p*₁. The cyclic shift value, relative to the first sequence, of the sensing signal received by the terminal device is 2*p*₁ + *g*, where *g* is a positive integer less than *p*₁.

The terminal device prestores the multiples corresponding to the first beam #1 to the first beam #3 as 1, 2, and 3 respectively. By dividing (2*p*₁ + *g*) by *p*₁ and rounding up the result, the first value is obtained, which is equal to 2. In this case, the terminal device may determine that its corresponding beam is the first beam #2, and that its corresponding cyclic shift value is 2*p*₁.

Alternatively, the terminal device prestores the cyclic shift values corresponding to the first beam #1 to the first beam #3 as *p*₁, 2*p*₁, and 3*p*₁ respectively. It can be learned that, among *p*₁ , 2*p*₁ , and 3*p*₁ , 2*p*₁ is less than (2*p*₁ + *g*) and closest to (2*p*₁ + *g*). In this case, the terminal device may determine that its corresponding beam is the first beam #2, and that its corresponding cyclic shift value is 2*p*₁.

In an optional implementation, the method further includes: The terminal device sends first information to the first device, where the first information indicates the beam corresponding to the terminal device; and correspondingly, the first device receives the first information from the terminal device. For example, the first information includes a number corresponding to the beam corresponding to the terminal device. This implementation allows the first device to utilize the beam corresponding to the terminal device to provide more targeted data transmission, thereby improving communication quality.

Optionally, the method further includes: The first device sends second information to the terminal device, where the second information indicates geographical location information corresponding to the beam associated with the terminal device; and correspondingly, the terminal device receives the second information from the first device. This implementation allows the terminal device to utilize the geographical location information indicated by the second information to send information/data to the first device in a more targeted manner and/or to receive information/data from the first device in a more targeted manner, thereby improving communication quality.

In an optional implementation, in addition to being used by the terminal device to determine the beam corresponding to the terminal device, the sensing signal in this embodiment of this application may be further used by the first device for sensing. Specifically, the first device senses an object based on the sensing signal and a reflected signal of the sensing signal reflected by the object. It may be understood that because the auto-ambiguity function of the sensing signal determined based on the first sequence has a unique peak, a cross-ambiguity function between the sensing signal and the reflected signal corresponding to the sensing signal has a unique peak. A distance between the object and the first device may be obtained by multiplying a time shift corresponding to the unique peak of the cross-ambiguity function between the sensing signal and the reflected signal by a speed of light. In addition, due to the Doppler effect (that is, a frequency of a reflected signal changes after a signal is reflected by a moving object), a moving speed of the object may be determined based on a frequency corresponding to the unique peak of the cross-ambiguity function between the sensing signal and the reflected signal.

In conclusion, in the signal transmission method, the first device determines the synchronization signal and the sensing signal based on the first sequence; the first device sends the synchronization signal; and the first device sends the sensing signal, where the sensing signal is used to determine the beam corresponding to the terminal device. The frequency offset value, relative to the first sequence, of the synchronization signal is different from that of the sensing signal, the auto-correlation function of the first sequence has a value of 0 for a non-zero time shift, and the auto-ambiguity function of the first sequence has a unique peak. It can be learned that, in the method, both the synchronization signal and the sensing signal are constructed based on the first sequence, and different frequency offset values are used to distinguish between the synchronization signal and the sensing signal. In the method, synchronization and sensing are combined, to implement integrated sensing and communication. In addition, the method further helps the terminal device determine, based on the sensing signal, the beam corresponding to the terminal device, so that the terminal device can subsequently communicate with the first device more accurately by using the determined beam, thereby improving communication quality.

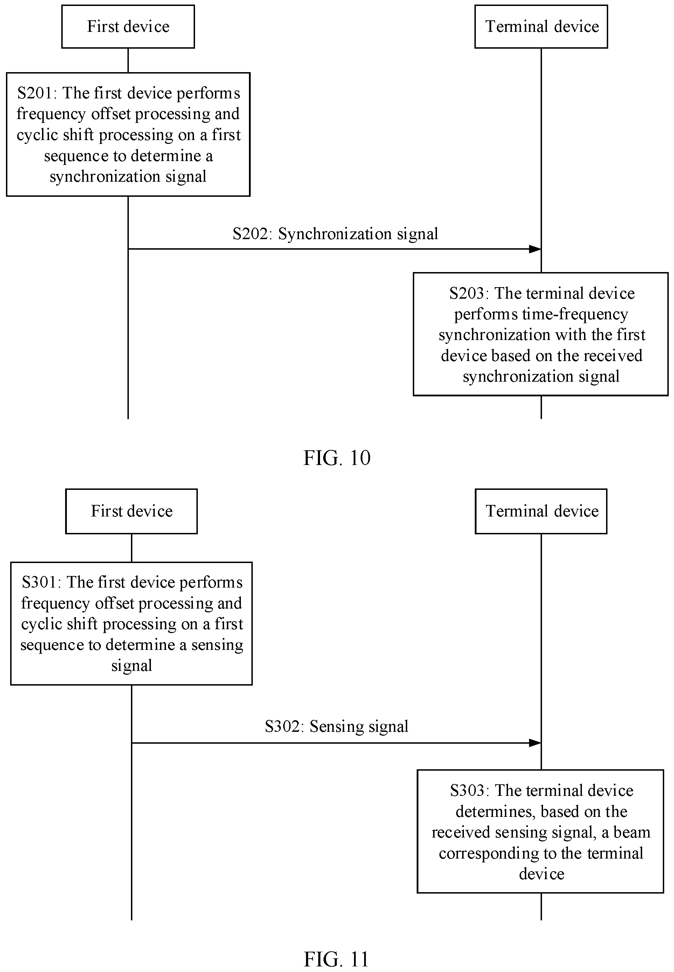

FIG. 10 is a diagram of another signal transmission method according to an embodiment of this application. The signal transmission method includes the following steps.

S201: A first device performs frequency offset processing and cyclic shift processing on a first sequence, to determine a synchronization signal.

An auto-correlation function of the first sequence has a value of 0 for a non-zero time shift, and an auto-ambiguity function of the first sequence has a unique peak. For specific descriptions of the first sequence, refer to the foregoing related descriptions. Details are not described again. It may be understood that this implementation helps expand a selection range of the synchronization signal.

In addition, a manner of determining a frequency offset value and a cyclic shift value that are used in step S201 is not limited in this embodiment of this application. For example, the used frequency offset value and/or the used cyclic shift value may be predefined, or may be determined by the first device based on factors such as a synchronization requirement and/or a communication environment.

In an optional implementation, the first device performs frequency offset processing and cyclic shift processing on the first sequence according to Formula (10) above, to obtain the synchronization signal. For specific descriptions, refer to the foregoing related descriptions. Details are not described again.

S202: The first device sends the synchronization signal; and correspondingly, a terminal device receives the synchronization signal.

S203: The terminal device performs time-frequency synchronization with the first device based on the received synchronization signal.

In addition, for specific descriptions of the operation of sending the synchronization signal by the first device and the operation of performing, by the terminal device, time-frequency synchronization with the first device based on the received synchronization signal, refer to the foregoing related descriptions. Details are not described again.

FIG. 11 is a diagram of another signal transmission method according to an embodiment of this application. The signal transmission method includes the following steps.

S301: A first device performs frequency offset processing and cyclic shift processing on a first sequence, to determine a sensing signal.

An auto-correlation function of the first sequence has a value of 0 for a non-zero time shift, and an auto-ambiguity function of the first sequence has a unique peak. For specific descriptions of the first sequence, refer to the foregoing related descriptions. Details are not described again.

In addition, a manner of determining a frequency offset value and a cyclic shift value that are used in step S301 is not limited in this embodiment of this application. For example, the used frequency offset value and/or the used cyclic shift value may be predefined, or may be determined by the first device based on factors such as a sensing requirement and/or a communication environment.

In an optional implementation, for different sensing signals, frequency offset values used by the first device to perform frequency offset processing on the first sequence are the same. For specific descriptions, refer to the related descriptions in the signal transmission method shown in FIG. 3. Details are not described again.

In an optional implementation, for different sensing signals, cyclic shift values used by the first device to perform cyclic shift processing on the first sequence are different. For specific descriptions, refer to the related descriptions in the signal transmission method shown in FIG. 3. Details are not described again.

In an optional implementation, the first device performs frequency offset processing and cyclic shift processing on the first sequence according to Formula (10) above, to obtain the sensing signal. For specific descriptions, refer to the foregoing related descriptions. Details are not described again.

S302: The first device sends the sensing signal; and correspondingly, a terminal device receives the sensing signal.

In an optional implementation, that the first device sends the sensing signal includes: The first device sends the sensing signal on each of a plurality of first beams, where cyclic shift values, relative to the first sequence, of the sensing signals sent on different first beams among the plurality of first beams are different. For specific descriptions, refer to the related descriptions in the signal transmission method shown in FIG. 3. Details are not described again.

In an optional implementation, before the terminal device receives the sensing signal, the method further includes: The terminal device performs time-frequency synchronization with the first device. This implementation helps reduce an error of the sensing signal received by the terminal device, and improve accuracy of the sensing signal received by the terminal device.

S303: The terminal device determines, based on the received sensing signal, a beam corresponding to the terminal device.

In an optional implementation, that the terminal device determines, based on the received sensing signal, the beam corresponding to the terminal device includes: The terminal device determines, from the plurality of first beams based on a cyclic shift value, relative to the first sequence, of the received sensing signal, the beam corresponding to the terminal device. This implementation may be applied to a scenario in which the cyclic shift values, relative to the first sequence, of the sensing signals sent by the first device on the different first beams among the plurality of first beams are different. For specific descriptions, refer to the related descriptions in the signal transmission method shown in FIG. 3. Details are not described again.

In an optional implementation, in addition to being used by the terminal device to determine the beam corresponding to the terminal device, the sensing signal may be further used by the first device for sensing. For specific descriptions, refer to the related descriptions in the signal transmission method shown in FIG. 3. Details are not described again.

In addition, for specific descriptions of steps S301 to S303, refer to the related descriptions in the signal transmission method shown in FIG. 3, which also has corresponding beneficial effects. Details are not described again.

To implement functions in the foregoing methods provided in embodiments of this application, the first device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

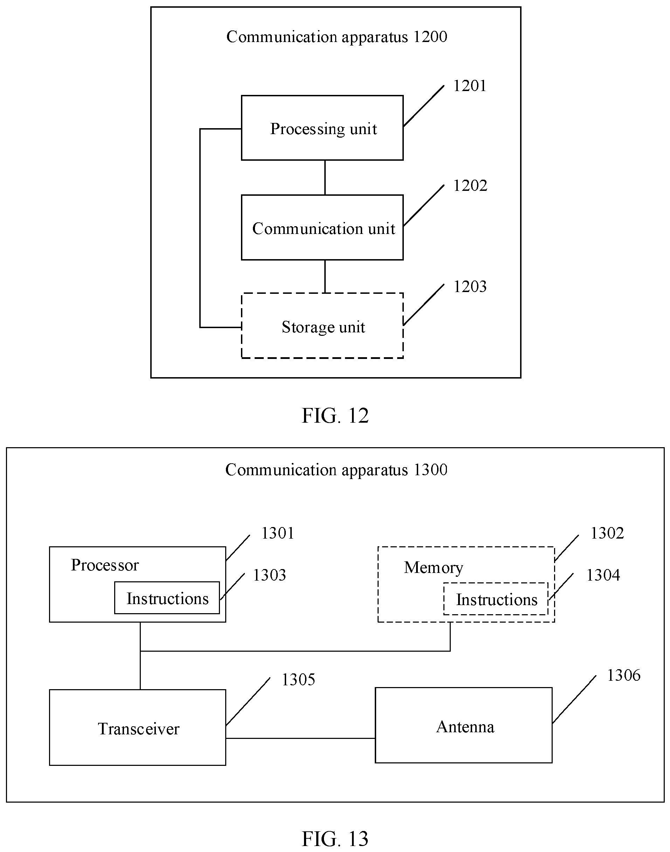

As shown in FIG. 12, an embodiment of this application provides a communication apparatus 1200. The communication apparatus 1200 may be a first device or a terminal device, or may be a component (for example, an integrated circuit or a chip) of a first device, or may be a component (for example, an integrated circuit or a chip) of a terminal device. Alternatively, the communication apparatus 1200 may be another communication unit, configured to implement the method in method embodiments of this application. The communication apparatus 1200 may include a processing unit 1201. Optionally, the communication apparatus 1200 may further include a communication unit 1202. The processing unit 1201 is configured to control the communication unit 1202 to receive and send data/signaling. The communication unit 1202 may also be referred to as a transceiver unit. Optionally, the communication unit 1202 may include a sending unit and a receiving unit. The sending unit may be configured to send data/signaling, and the receiving unit may be configured to receive data/signaling. Optionally, the communication apparatus 1200 may further include a storage unit 1203. The storage unit 1203 may be configured to store information, data, instructions, and/or the like. The storage unit 1203 may interact with the processing unit 1201, or may interact with the communication unit 1202.

In a possible design, for a case in which the communication apparatus 1200 is configured to implement a function of the first device in the foregoing method embodiments:

The processing unit 1201 is configured to determine a synchronization signal and a sensing signal based on a first sequence. A frequency offset value, relative to the first sequence, of the synchronization signal is different from that of the sensing signal, an auto-correlation function of the first sequence has a value of 0 for a non-zero time shift, and an auto-ambiguity function of the first sequence has a unique peak.

The communication unit 1202 is configured to send the synchronization signal.

The communication unit 1202 is further configured to send the sensing signal, where the sensing signal is used to determine a beam corresponding to the terminal device.

In an optional implementation, the frequency offset value, relative to the first sequence, of the synchronization signal is an odd multiple of a first parameter, and the frequency offset value, relative to the first sequence, of the sensing signal is an even multiple of the first parameter; or the frequency offset value, relative to the first sequence, of the synchronization signal is an even multiple of a first parameter, and the frequency offset value, relative to the first sequence, of the sensing signal is an odd multiple of the first parameter, where the first parameter is determined based on a maximum moving speed of an object within a cell.

In an optional implementation, when sending the sensing signal, the communication unit 1202 is specifically configured to: send the sensing signal on each of a plurality of first beams, where cyclic shift values, relative to the first sequence, of the sensing signals sent on different first beams among the plurality of first beams are different; and the sensing signal is used to determine, from the plurality of first beams, the beam corresponding to the terminal device.

In an optional implementation, the cyclic shift values, relative to the first sequence, of the sensing signals sent on the different first beams among the plurality of first beams are different integer multiples of a second parameter; and the second parameter is determined based on a maximum delay from sending a signal to receiving a reflected signal corresponding to the signal.

In an optional implementation, the different first beams among the plurality of first beams have different coverage areas; and a coverage area of each of the plurality of first beams falls within a coverage area of a second beam, and the second beam is a beam used to send the synchronization signal.

In an optional implementation, the first sequence is [*k*₀, *k*₁, *..., k*_{*l*-1}]*,* and *l* is an integer greater than 1; and when determining the synchronization signal and the sensing signal based on the first sequence, the processing unit is specifically configured to: determine the synchronization signal and the sensing signal based on the first sequence and the following formula: ${B}_{p}^{θ} \left(n\right) = {k}_{\left(n+p\right) mod \left(l\right)} \times exp \left(jnθ\right) ,$ where *n* = 0, 1, ... , *l* - 1; and *θ* is the frequency offset value, p is the cyclic shift value, *mod* is a modulo function, and *exp* is an exponential function with a natural constant e as a base.

In an optional implementation, the first sequence is [*k*₀, *k*₁, ... , *k*_{*l*-1}], and *l* is an integer greater than 1; and the first sequence satisfies the following formula: ${\sum }_{n = 0}^{l - 1} {k}_{n mod l} ⋅ {k}_{\left(n+c\right) mod l}^{∗} = \left\{\begin{matrix}{\sum }_{n = 0}^{l - 1} {\left|{k}_{n}\right|}^{2} & c = 0 \\ 0 & 0 < c < l\end{matrix}\right. ,$ where c is a time shift, and *mod* is a modulo function.

In an optional implementation, the first sequence is obtained by performing discrete Fourier transform on a modulated m-sequence.

In an optional implementation, the synchronization signal is a primary synchronization signal.

In another possible design, for a case in which the communication apparatus 1200 is configured to implement a function of the terminal device in the foregoing method embodiments:
The communication unit 1202 is configured to receive a synchronization signal.

The communication unit 1202 is further configured to receive a sensing signal.

A frequency offset value, relative to the first sequence, of the synchronization signal is different from that of the sensing signal, an auto-correlation function of the first sequence has a value of 0 for a non-zero time shift, and an auto-ambiguity function of the first sequence has a unique peak.

The processing unit 1201 is configured to determine, based on the sensing signal, a beam corresponding to the communication apparatus 1200.

In an optional implementation, the frequency offset value, relative to the first sequence, of the synchronization signal is an odd multiple of a first parameter, and the frequency offset value, relative to the first sequence, of the sensing signal is an even multiple of the first parameter; or the frequency offset value, relative to the first sequence, of the synchronization signal is an even multiple of a first parameter, and the frequency offset value, relative to the first sequence, of the sensing signal is an odd multiple of the first parameter, where the first parameter is determined based on a maximum moving speed of an object within a cell.

In an optional implementation, when determining, based on the sensing signal, the beam corresponding to the communication apparatus 1200, the processing unit 1201 is specifically configured to: determine, from a plurality of first beams based on a cyclic shift value, relative to the first sequence, of the received sensing signal, the beam corresponding to the communication apparatus 1200.

In an optional implementation, when determining, from the plurality of first beams based on the cyclic shift value, relative to the first sequence, of the received sensing signal, the beam corresponding to the communication apparatus 1200, the processing unit 1201 is specifically configured to: determine, from the plurality of first beams based on the cyclic shift value, relative to the first sequence, of the received sensing signal and a second parameter, the beam corresponding to the communication apparatus 1200.

In an optional implementation, the first sequence is [*k*₀, *k*₁, *... , k*_{*l*-1}], and *l* is an integer greater than 1; and the synchronization signal and the sensing signal are determined based on the first sequence and the following formula: ${B}_{p}^{θ} \left(n\right) = {k}_{\left(n+p\right) mod \left(l\right)} \times exp \left(jnθ\right)$, where *n =* 0, 1, ... *, l* - 1; and *θ* is the frequency offset value, p is the cyclic shift value, *mod* is a modulo function, and *exp* is an exponential function with a natural constant e as a base.

In an optional implementation, the first sequence is [*k*₀, *k*₁, ... , *k*_{*l-*1}], and *l* is an integer greater than 1; and the first sequence satisfies the following formula: ${\sum }_{n = 0}^{l - 1} {k}_{n mod l} ⋅ {k}_{\left(n+c\right) mod l}^{∗} = \left\{\begin{matrix}{\sum }_{n = 0}^{l - 1} {\left|{k}_{n}\right|}^{2} & c = 0 \\ 0 & 0 < c < l\end{matrix}\right. ,$ where c is a time shift, and *mod* is a modulo function.

In an optional implementation, the first sequence is obtained by performing discrete Fourier transform on a modulated m-sequence.

In an optional implementation, the synchronization signal is a primary synchronization signal.

This embodiment of this application and the foregoing method embodiments are based on a same concept, and bring same technical effects. For a specific principle, refer to the descriptions in the foregoing embodiments. Details are not described again.

An embodiment of this application further provides a communication apparatus 1300, as shown in FIG. 13. The communication apparatus 1300 may be a first device or a terminal device, or may be a chip, a chip system, a processor, or the like that supports a first device in implementing the foregoing methods, or may be a chip, a chip system, a processor, or the like that supports a terminal device in implementing the foregoing methods. The apparatus may be configured to implement the methods described in the foregoing method embodiments. For details, refer to the descriptions in the foregoing method embodiments.

The communication apparatus 1300 may include one or more processors 1301. The processor 1301 may be configured to implement some or all of functions of the first device or the terminal device through a logic circuit or by running a computer program. The processor 1301 may be a general-purpose processor, a dedicated processor, or the like. For example, the processor 1301 may be a baseband processor, a digital signal processor, an application-specific integrated circuit, a field programmable gate array or another programmable logic device, a discrete gate or a transistor logic device, or a discrete hardware component or a CPU. The baseband processor may be configured to process a communication protocol and communication data. The central processing unit may be configured to control the communication apparatus, execute a software program, and process data of the software program. The communication apparatus is, for example, a base station, a baseband chip, a terminal, a terminal chip, a distributed unit (distributed unit, DU), or a central unit (central unit, CU).

Optionally, the communication apparatus 1300 may include one or more memories 1302, where the memory 1302 stores instructions 1304. The instructions may be run on the processor 1301, to enable the communication apparatus 1300 to perform the method described in the foregoing method embodiments. Optionally, the memory 1302 may further store data. The processor 1301 and the memory 1302 may be separately disposed, or may be integrated together.

The memory 1302 may include but is not limited to a non-volatile memory such as a hard disk drive (hard disk drive, HDD) or a solid-state drive (solid-state drive, SSD), a random access memory (random access memory, RAM), an erasable programmable read-only memory (erasable programmable ROM, EPROM), a ROM or a compact disc read-only memory (compact disc read-only memory, CD-ROM), or the like.

Optionally, the communication apparatus 1300 may further include a transceiver 1305 and an antenna 1306. The transceiver 1305 may be referred to as a transceiver unit, a transceiver machine, a transceiver circuit, or the like, and is configured to implement a transceiver function. The transceiver 1305 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

In a possible design, for a case in which the communication apparatus 1300 is configured to implement a function of the first device in the foregoing method embodiments:

The processor 1301 is configured to determine a synchronization signal and a sensing signal based on a first sequence. A frequency offset value, relative to the first sequence, of the synchronization signal is different from that of the sensing signal, an auto-correlation function of the first sequence has a value of 0 for a non-zero time shift, and an auto-ambiguity function of the first sequence has a unique peak.

The transceiver 1305 is configured to send the synchronization signal.

The transceiver 1305 is further configured to send the sensing signal, where the sensing signal is used to determine a beam corresponding to the terminal device.

In an optional implementation, the frequency offset value, relative to the first sequence, of the synchronization signal is an odd multiple of a first parameter, and the frequency offset value, relative to the first sequence, of the sensing signal is an even multiple of the first parameter; or the frequency offset value, relative to the first sequence, of the synchronization signal is an even multiple of a first parameter, and the frequency offset value, relative to the first sequence, of the sensing signal is an odd multiple of the first parameter, where the first parameter is determined based on a maximum moving speed of an object within a cell.

In an optional implementation, when sending the sensing signal, the transceiver 1305 is specifically configured to: send the sensing signal on each of a plurality of first beams, where cyclic shift values, relative to the first sequence, of the sensing signals sent on different first beams among the plurality of first beams are different; and the sensing signal is used to determine, from the plurality of first beams, the beam corresponding to the terminal device.

In an optional implementation, the cyclic shift values, relative to the first sequence, of the sensing signals sent on the different first beams among the plurality of first beams are different integer multiples of a second parameter; and the second parameter is determined based on a maximum delay from sending a signal to receiving a reflected signal corresponding to the signal.

In an optional implementation, the different first beams among the plurality of first beams have different coverage areas; and a coverage area of each of the plurality of first beams falls within a coverage area of a second beam, and the second beam is a beam used to send the synchronization signal.

In an optional implementation, the first sequence is [*k*₀, *k*₁, ... *, k*_{*l*-1}], and *l* is an integer greater than 1; and when determining the synchronization signal and the sensing signal based on the first sequence, the processor is specifically configured to: determine the synchronization signal and the sensing signal based on the first sequence and the following formula: ${B}_{p}^{θ} \left(n\right) = {k}_{\left(n+p\right) mod \left(l\right)} \times exp \left(jnθ\right)$, where *n* = 0, 1, ... , *l* - 1 ; and *θ* is the frequency offset value, *p* is the cyclic shift value, *mod* is a modulo function, and *exp* is an exponential function with a natural constant e as a base.

In an optional implementation, the first sequence is [*k*₀, *k*₁, ... *, k*_{*l-*1}], and *l* is an integer greater than 1; and the first sequence satisfies the following formula: ${\sum }_{n = 0}^{l - 1} {k}_{n mod l} ⋅ {k}_{\left(n+c\right) mod l}^{∗} = \left\{\begin{matrix}{\sum }_{n = 0}^{l - 1} {\left|{k}_{n}\right|}^{2} & c = 0 \\ 0 & 0 < c < l\end{matrix}\right. ,$ where *c* is a time shift, and *mod* is a modulo function.

In an optional implementation, the first sequence is obtained by performing discrete Fourier transform on a modulated m-sequence.

In an optional implementation, the synchronization signal is a primary synchronization signal.

In another possible design, for a case in which the communication apparatus 1300 is configured to implement a function of the terminal device in the foregoing method embodiments:

The transceiver 1305 is configured to receive a synchronization signal.

The transceiver 1305 is further configured to receive a sensing signal.

A frequency offset value, relative to the first sequence, of the synchronization signal is different from that of the sensing signal, an auto-correlation function of the first sequence has a value of 0 for a non-zero time shift, and an auto-ambiguity function of the first sequence has a unique peak.

The processor 1301 is configured to determine, based on the sensing signal, a beam corresponding to the communication apparatus 1300.

In an optional implementation, the frequency offset value, relative to the first sequence, of the synchronization signal is an odd multiple of a first parameter, and the frequency offset value, relative to the first sequence, of the sensing signal is an even multiple of the first parameter; or the frequency offset value, relative to the first sequence, of the synchronization signal is an even multiple of a first parameter, and the frequency offset value, relative to the first sequence, of the sensing signal is an odd multiple of the first parameter, where the first parameter is determined based on a maximum moving speed of an object within a cell.

In an optional implementation, when determining, based on the sensing signal, the beam corresponding to the communication apparatus 1300, the processor 1301 is specifically configured to: determine, from a plurality of first beams based on a cyclic shift value, relative to the first sequence, of the received sensing signal, the beam corresponding to the communication apparatus 1300.

In an optional implementation, when determining, from the plurality of first beams based on the cyclic shift value, relative to the first sequence, of the received sensing signal, the beam corresponding to the communication apparatus 1300, the processor 1301 is specifically configured to: determine, from the plurality of first beams based on the cyclic shift value, relative to the first sequence, of the received sensing signal and a second parameter, the beam corresponding to the communication apparatus 1300.

In an optional implementation, the first sequence is [*k*₀, *k*₁, *..., k*_{*l*-1}]*,* and *l* is an integer greater than 1; and the synchronization signal and the sensing signal are determined based on the first sequence and the following formula: ${B}_{p}^{θ} \left(n\right) = {k}_{\left(n+p\right) mod \left(l\right)} \times exp \left(jnθ\right)$, where *n =* 0, 1, ... *, l* - 1; and *θ* is the frequency offset value, p is the cyclic shift value, *mod* is a modulo function, and *exp* is an exponential function with a natural constant e as a base.

In an optional implementation, the first sequence is [*k*₀, *k*₁, ... , *k*_{*l*-1}]*,* and *l* is an integer greater than 1; and the first sequence satisfies the following formula: ${\sum }_{n = 0}^{l - 1} {k}_{n mod l} ⋅ {k}_{\left(n+c\right) mod l}^{∗} = \left\{\begin{matrix}{\sum }_{n = 0}^{l - 1} {\left|{k}_{n}\right|}^{2} & c = 0 \\ 0 & 0 < c < l\end{matrix}\right. ,$ where c is a time shift, and *mod* is a modulo function.

In an optional implementation, the first sequence is obtained by performing discrete Fourier transform on a modulated m-sequence.

In an optional implementation, the synchronization signal is a primary synchronization signal.

In another possible design, the processor 1301 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1301 may store instructions 1303. The instructions 1303 are run on the processor 1301, to enable the communication apparatus 1300 to perform the method described in the foregoing method embodiments. The instructions 1303 may be fixed in the processor 1301. In this case, the processor 1301 may be implemented by hardware.

In still another possible design, the communication apparatus 1300 may include a circuit, and the circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal-oxide-semiconductor (nMetal-oxide-semiconductor, NMOS), a P-channel metal-oxide-semiconductor (positive-channel metal-oxide-semiconductor, PMOS), a bipolar junction transistor (bipolar junction transistor, BJT), a bipolar CMOS (BiCMOS), silicon germanium (SiGe), and gallium arsenide (GaAs).

A person skilled in the art may further understand that various illustrative logical blocks (illustrative logic blocks) and steps (steps) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application and the foregoing method embodiments are based on a same concept, and bring same technical effects. For a specific principle, refer to the descriptions in the foregoing method embodiments. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, wherein the method comprises:
determining a synchronization signal and a sensing signal based on a first sequence, wherein
a frequency offset value, relative to the first sequence, of the synchronization signal is different from a frequency offset value, relative to the first sequence, of the sensing signal, an auto-correlation function of the first sequence has a value of 0 for a non-zero time shift, and an auto-ambiguity function of the first sequence has a unique peak;
sending the synchronization signal; and
sending the sensing signal, wherein the sensing signal is used to determine a beam corresponding to a terminal device.

2. The method according to claim 1, wherein
the frequency offset value, relative to the first sequence, of the synchronization signal is an odd multiple of a first parameter, and the frequency offset value, relative to the first sequence, of the sensing signal is an even multiple of the first parameter; or
the frequency offset value, relative to the first sequence, of the synchronization signal is an even multiple of a first parameter, and the frequency offset value, relative to the first sequence, of the sensing signal is an odd multiple of the first parameter, wherein
the first parameter is determined based on a maximum moving speed of an object within a cell.

3. The method according to claim 1 or 2, wherein sending the sensing signal comprises:
sending the sensing signal on each of a plurality of first beams, wherein cyclic shift values, relative to the first sequence, of the sensing signals sent on different first beams among the plurality of first beams are different; and
the sensing signal is used to determine, from the plurality of first beams, the beam corresponding to the terminal device.

4. The method according to claim 3, wherein
the cyclic shift values, relative to the first sequence, of the sensing signals sent on the different first beams among the plurality of first beams are different integer multiples of a second parameter; and
the second parameter is determined based on a maximum delay from sending a signal to receiving a reflected signal corresponding to the signal.

5. The method according to claim 3 or 4, wherein
the different first beams among the plurality of first beams have different coverage areas; and
a coverage area of each of the plurality of first beams falls within a coverage area of a second beam, and the second beam is a beam used to send the synchronization signal.

6. The method according to any one of claims 1 to 5, wherein the first sequence is [*k*₀, *k*₁, ... , *k*_{*l*-1}]*,* and *l* is an integer greater than 1; and
determining the synchronization signal and the sensing signal based on the first sequence comprises: determining the synchronization signal and the sensing signal based on the first sequence and the following formula: ${B}_{p}^{θ} \left(n\right) = {k}_{\left(n+p\right) mod \left(l\right)} \times exp \left(jnθ\right) ,$ wherein *n* = 0, 1, ... , *l* - 1; and
*θ* is the frequency offset value, p is the cyclic shift value, *mod* is a modulo function, and *exp* is an exponential function with a natural constant e as a base.

7. The method according to any one of claims 1 to 6, wherein
the first sequence is [*k*₀, *k*₁, *..., k*_{*l*-1}]*, l* is an integer greater than 1, and the first sequence satisfies the following formula: ${\sum }_{n = 0}^{l - 1} {k}_{n mod l} ⋅ {k}_{\left(n+c\right) mod l}^{∗} = \left\{\begin{matrix}{\sum }_{n = 0}^{l - 1} {\left|{k}_{n}\right|}^{2} & c = 0 \\ 0 & 0 < c < l\end{matrix}\right. ,$ wherein
c is a time shift, and *mod* is a modulo function.

8. The method according to any one of claims 1 to 7, wherein
the first sequence is obtained by performing discrete Fourier transform on a modulated m-sequence.

9. The method according to any one of claims 1 to 8, wherein
the synchronization signal is a primary synchronization signal.

10. A signal transmission method, wherein the method comprises:
receiving a synchronization signal;
receiving a sensing signal, wherein
a frequency offset value, relative to a first sequence, of the synchronization signal is different from a frequency offset value, relative to the first sequence, of the sensing signal, an auto-correlation function of the first sequence has a value of 0 for a non-zero time shift, and an auto-ambiguity function of the first sequence has a unique peak; and
determining, based on the sensing signal, a beam corresponding to a terminal device.

11. The method according to claim 10, wherein
the frequency offset value, relative to the first sequence, of the synchronization signal is an odd multiple of a first parameter, and the frequency offset value, relative to the first sequence, of the sensing signal is an even multiple of the first parameter; or
the frequency offset value, relative to the first sequence, of the synchronization signal is an even multiple of a first parameter, and the frequency offset value, relative to the first sequence, of the sensing signal is an odd multiple of the first parameter, wherein
the first parameter is determined based on a maximum moving speed of an object within a cell.

12. The method according to claim 10 or 11, wherein determining, based on the sensing signal, the beam corresponding to the terminal device comprises:
determining, from a plurality of first beams based on a cyclic shift value, relative to the first sequence, of the sensing signal, the beam corresponding to the terminal device.

13. The method according to claim 12, wherein determining, from the plurality of first beams based on the cyclic shift value, relative to the first sequence, of the received sensing signal, the beam corresponding to the terminal device comprises:
determining, from the plurality of first beams based on the cyclic shift value, relative to the first sequence, of the sensing signal and a second parameter, the beam corresponding to the terminal device.

14. The method according to any one of claims 10 to 13, wherein the first sequence is [*k*₀, *k*₁, *..., k*_{*l*-1}]*,* and *l* is an integer greater than 1; and
the synchronization signal and the sensing signal are determined based on the first sequence and the following formula: ${B}_{p}^{θ} \left(n\right) = {k}_{\left(n+p\right) mod \left(l\right)} \times exp \left(jnθ\right) ,$ wherein *n* = 0, 1, ... , *l* - 1; and
*θ* is the frequency offset value, p is the cyclic shift value, *mod* is a modulo function, and *exp* is an exponential function with a natural constant e as a base.

15. The method according to any one of claims 10 to 14, wherein
the first sequence is [*k*₀, *k*₁, *..., k*_{*l*-1}]*, l* is an integer greater than 1, and the first sequence satisfies the following formula: ${\sum }_{n = 0}^{l - 1} {k}_{n mod l} ⋅ {k}_{\left(n+c\right) mod l}^{∗} = \left\{\begin{matrix}{\sum }_{n = 0}^{l - 1} {\left|{k}_{n}\right|}^{2} & c = 0 \\ 0 & 0 < c < l\end{matrix}\right. ,$ wherein
c is a time shift, and *mod* is a modulo function.

16. The method according to any one of claims 10 to 15, wherein
the first sequence is obtained by performing discrete Fourier transform on a modulated m-sequence.

17. The method according to any one of claims 10 to 16, wherein
the synchronization signal is a primary synchronization signal.

18. A communication apparatus, wherein the apparatus comprises:
a processing unit, configured to determine a synchronization signal and a sensing signal based on a first sequence, wherein
a frequency offset value, relative to the first sequence, of the synchronization signal is different from a frequency offset value, relative to the first sequence, of the sensing signal, an auto-correlation function of the first sequence has a value of 0 for a non-zero time shift, and an auto-ambiguity function of the first sequence has a unique peak; and
a communication unit, configured to send the synchronization signal, wherein
the communication unit is further configured to send the sensing signal, wherein the sensing signal is used to determine a beam corresponding to a terminal device.

19. The apparatus according to claim 18, wherein
the frequency offset value, relative to the first sequence, of the synchronization signal is an odd multiple of a first parameter, and the frequency offset value, relative to the first sequence, of the sensing signal is an even multiple of the first parameter; or
the frequency offset value, relative to the first sequence, of the synchronization signal is an even multiple of a first parameter, and the frequency offset value, relative to the first sequence, of the sensing signal is an odd multiple of the first parameter, wherein
the first parameter is determined based on a maximum moving speed of an object within a cell.

20. The apparatus according to claim 18 or 19, wherein when sending the sensing signal, the communication unit is specifically configured to:
send the sensing signal on each of a plurality of first beams, wherein cyclic shift values relative to the first sequence, of the sensing signals sent on different first beams among the plurality of first beams are different; and
the sensing signal is used to determine, from the plurality of first beams, the beam corresponding to the terminal device.

21. The apparatus according to claim 20, wherein
the cyclic shift values, relative to the first sequence, of the sensing signals sent on the different first beams among the plurality of first beams are different integer multiples of a second parameter; and
the second parameter is determined based on a maximum delay from sending a signal to receiving a reflected signal corresponding to the signal.

22. The apparatus according to claim 20 or 21, wherein
the different first beams among the plurality of first beams have different coverage areas; and
a coverage area of each of the plurality of first beams falls within a coverage area of a second beam, and the second beam is a beam used to send the synchronization signal.

23. The apparatus according to any one of claims 18 to 22, wherein the first sequence is [*k*₀, *k*₁, ... *, k*_{*l-*1}], and *l* is an integer greater than 1; and
when determining the synchronization signal and the sensing signal based on the first sequence, the processing unit is specifically configured to:
determine the synchronization signal and the sensing signal based on the first sequence and the following formula: ${B}_{p}^{θ} \left(n\right) = {k}_{\left(n+p\right) mod \left(l\right)} \times exp \left(jnθ\right) ,$ wherein *n* = 0, 1, ... *, l* - 1; and
*θ* is the frequency offset value, *p* is the cyclic shift value, *mod* is a modulo function, and *exp* is an exponential function with a natural constant e as a base.

24. A communication apparatus, wherein the apparatus comprises:
a communication unit, configured to receive a synchronization signal, wherein
the communication unit is further configured to receive a sensing signal; and
a frequency offset value, relative to a first sequence, of the synchronization signal is different from a frequency offset value, relative to the first sequence, of the sensing signal, an auto-correlation function of the first sequence has a value of 0 for a non-zero time shift, and an auto-ambiguity function of the first sequence has a unique peak; and
a processing unit, configured to determine, based on the sensing signal, a beam corresponding to the apparatus.

25. The apparatus according to claim 24, wherein
the frequency offset value, relative to the first sequence, of the synchronization signal is an odd multiple of a first parameter, and the frequency offset value, relative to the first sequence, of the sensing signal is an even multiple of the first parameter; or
the frequency offset value, relative to the first sequence, of the synchronization signal is an even multiple of a first parameter, and the frequency offset value, relative to the first sequence, of the sensing signal is an odd multiple of the first parameter, wherein
the first parameter is determined based on a maximum moving speed of an object within a cell.

26. The apparatus according to claim 24 or 25, wherein when determining, based on the sensing signal, the beam corresponding to the apparatus, the processing unit is specifically configured to:
determine, from a plurality of first beams based on a cyclic shift value, relative to the first sequence, of the received sensing signal, the beam corresponding to the apparatus.

27. The apparatus according to claim 26, wherein when determining, from the plurality of first beams based on the cyclic shift value, relative to the first sequence, of the received sensing signal, the beam corresponding to the apparatus, the processing unit is specifically configured to:
determine, from the plurality of first beams based on the cyclic shift value, relative to the first sequence, of the received sensing signal and a second parameter, the beam corresponding to the apparatus.

28. A communication apparatus, comprising a memory and a processor, wherein
the memory is configured to store instructions or a computer program; and
the processor is configured to execute the computer program or the instructions stored in the memory, to enable the communication apparatus to perform the method according to any one of claims 1 to 9, or enable the communication apparatus to perform the method according to any one of claims 10 to 17.

29. A computer-readable storage medium, wherein the computer-readable storage medium stores a computer program; and when the computer program is run, the method according to any one of claims 1 to 9 is implemented, or the method according to any one of claims 10 to 17 is implemented.

30. A computer program product, wherein the computer program product comprises computer program code; and when the computer program code is run, the method according to any one of claims 1 to 9 is implemented, or the method according to any one of claims 10 to 17 is implemented.
